# EUROPÄISCHE PATENTANMELDUNG

(11) **EP 2 704 022 A2**
(43) Veröffentlichungstag der Anmeldung: **05.03.2014**
(21) Anmeldenummer: 13182390.8
(22) Anmeldetag: 30.08.2013
(51) Int. Cl.: G06F 13/40

(54) **Rechnersystem**

(30) Priorität: 31.08.2012 DE 102012017339
(71) Anmelder: EADS Deutschland GmbH, 85521 Ottobrunn (DE)
(72) Erfinder: Münch, Daniel J., 81241 München (DE); Paulitsch, Michael, 85521 Ottobrunn (DE)
(74) Vertreter: Flügel Preissner Kastel Schober

(57) **Zusammenfassung**

Ein Rechnersystem mit wenigstens zwei CPUs, die jeweils eine PCIe-Bus-Hierarchie aufweisen, mittels derer Nachrichten, die jeweils eine Herkunftsadresse, eine Zieladresse und eine Nutzlast aufweisen, zwischen angeschlossenen Kommunikationseinrichtungen übertragbar sind, wobei die Kommunikationseinrichtungen jeweils einen Adressbereich in einem Adressraum der PCIe-Bus-Hierarchie aufweisen, dessen Adressen als Zieladressen in Nachrichten für die jeweilige Kommunikationseinrichtung nutzbar sind, wobei die PCIe-Bus-Hierarchien mittels einer Brückeneinrichtung miteinander derart verbunden sind, dass Nachrichten zwischen an unterschiedlichen PCIe-Bus-Hierarchien angeschlossenen Kommunikationseinrichtungen austauschbar sind, wobei das Rechnersystem wenigstens eine Peripherieeinrichtung mit einer Kommunikationseinrichtung aufweist, die von den CPUs gemeinsam nutzbar ist, wobei die Brückeneinrichtung eine Übersetzungseinrichtung aufweist, welche zur Übersetzung der Zieladresse von Nachrichten ausgebildet ist, die von einer PCIe-Bus-Hierarchie in eine andere übertragen werden.

## Beschreibung

Die Erfindung betrifft ein Rechnersystem mit wenigstens zwei CPUs, die jeweils eine PCle-Bus-Hierarchie aufweisen. Mittels der PCle-Bus-Hierarchie sind Nachrichten, die jeweils eine Herkunftsadresse, eine Zieladresse und eine Nutzlast aufweisen, zwischen angeschlossenen Kommunikationseinrichtungen übertragbar. Die Kommunikationseinrichtungen weisen jeweils einen Adressbereich in einem Adressraum der PCle-Bus-Hierarchie auf, dessen Adressen als Zieladressen in Nachrichten für die jeweilige Kommunikationseinrichtung nutzbar sind. Die PCle-Bus-Hierarchien sind mittels einer Brückeneinrichtung derart miteinander verbunden, das Nachrichten zwischen an unterschiedlichen PCle-Bus-Hierarchien angeschlossenen Kommunikationseinrichtungen austauschbar sind.

PCle-Bussysteme, die nur eine einzelne Baumstruktur oder Hierarchie (single root) aufweisen, sind weit verbreitet, beispielsweise in Personal Computern. In einer PCle-Bus-Hierarchie gibt es gewöhnlich einen Master, der die Kommunikation innerhalb dieser Hierarchie weitgehend steuert. Da es sich bei PCIe (peripheral component interconnect express) um einen internen Bus für Rechnersysteme handelt, werden Herkunft und Ziel von darüber übertragenen Daten gewöhnlich entweder über Speicheradressen oder Ein-/Ausgabeadressen (Ein-/Ausgabe=EA=IO=input/output) angegeben. Neuere Systeme verwenden hauptsächlich Speicheradressen.

Eine PCle-Bus-Hierarchie erlaubt nicht nur die Kommunikation des Masters mit den angeschlossenen Kommunikationseinrichtungen oder Peripheriegeräten, sondern auch eine Kommunikation der Peripheriegeräte unmittelbar mit dem Arbeitsspeicher oder untereinander.

An die PCle-Bus-Hierarchie angeschlossene Kommunikationseinrichtungen werden auch als Endpunkte bezeichnet, unabhängig davon, ob sie ein Peripheriegerät, einen Master oder eine andere Kategorie von Geräten darstellen.

Die Übertragungen über den PCle-Bus werden sehr häufig von einer angeschlossenen CPU gesteuert. So kann die CPU beispielsweise einen Festplattencontroller anweisen, den Inhalt eines bestimmten Sektors einer angeschlossenen Festplatte über den PCle-Bus in den Arbeitsspeicher zu übertragen.

Prozesse in modernen CPUs laufen gewöhnlich in einer wenigstens teilweise virtualisierten Umgebung ab. So fordern Prozesse beispielsweise von einem Betriebssystem Arbeitsspeicher an, der dann innerhalb eines virtuellen Adressraums des Prozesses eingeblendet wird und dort zur Verwendung bereitsteht. Die Speicheradresse, an welcher der Arbeitsspeicher eingeblendet wird, ist jedoch gewöhnlich nicht dieselbe, über die der Arbeitsspeicher tatsächlich durch die Hardware der CPU angesprochen wird. Daher muss, wenn eine Transaktion zwischen einem an dem PCIe-Bus angebundenen Peripheriegerät und dem Arbeitsspeicher stattfindet, darauf geachtet werden, dass dem Peripheriegerät die korrekte Adresse mitgeteilt wird. Ein weiterer Ansatz ist es, die Adressen innerhalb des PCle-Busses zu übersetzen. Dies wird in Richtung von der CPU zu dem Arbeitsspeicher durch eine Speicherverwaltungseinheit (memory management unit, MMU) und in Richtung von Peripheriegeräten zu dem Arbeitsspeicher durch eine EA-Speicherverwaltungseinheit (input/output memory management unit, IOMMU) bewerkstelligt.

Einige Peripheriegeräte bieten die Möglichkeit, ihre Funktionen zu virtualisieren. Dies bedeutet, dass dasselbe Peripheriegerät an unterschiedlichen Adressen im Adressraum ansprechbar ist. Für die CPU hatte somit den Anschein, als wäre das Peripheriegerät in mehrfacher Ausführung vorhanden. Das Peripheriegerät bündelt die Anfragen an die unterschiedlichen Adressen und reagiert auf definierte Weise darauf. Obwohl aus Sicht der CPU mehrere Peripheriegeräte vorhanden sind, werden dennoch alle angeforderten Operationen nur von einem Peripheriegerät bedient.

Es kann notwendig sein, solche virtualisierbaren Peripheriegeräte in einem Rechnersystem nur einmal vorzusehen, obwohl sie von mehreren CPUs verwendet werden sollen. Weil ein Peripheriegerät gewöhnlich nur eine PCle-Bus-Schnittstelle aufweist, kann es dadurch nötig werden, dass unterschiedliche PCle-Bus-Hierarchien miteinander verbunden werden. Dies ist nicht so einfach wie beispielsweise bei lokalen Datenübertragungsnetzwerken. Sofern Geräte auf den verbundenen PCle-Bus-Hierarchien identische Adressen benutzen und auf Anfragen reagieren, sind beide PCle-Bus-Hierarchien nicht mehr benutzbar.

Es ist daher ratsam, bei der Verbindung solcher Bussysteme Filter und Übersetzungsvorrichtungen vorzusehen.

Der Erfindung liegt die Aufgabe zugrunde, eine Verbindung zwischen verschiedenen PCle-Bus-Hierarchien bereitzustellen, die sowohl gegenüber Hardwarefehlern (Betriebssicherheit) als auch gegenüber durch böswillige Angriffe verursachte (Sicherheit) Fehlfunktionen resistent ist, und die eine Ausbreitung solcher Fehler und Fehlfunktionen verhindert.

Zur Lösung wird ein Rechnersystem gemäß Patentanspruch 1 vorgeschlagen.

Erfindungsgemäß weist die Brückeneinrichtung, welche die PCle-Bus-Hierarchien verbindet, eine Übersetzungseinrichtung auf, welche zur Übersetzung der Zieladresse von Nachrichten ausgebildet ist, die von einer PCle-Bus-Hierarchie in eine andere übertragen werden. Dies hat den Vorteil, dass eine Kollision von Adressbereichen aus den unterschiedlichen PCle-Bus-Hierarchien verhindert wird. Sofern somit an einer der angeschlossenen PCle-Bus-Hierarchien Pakete mit inkorrekten Adressen erzeugt werden, kann eine Ausbreitung dieser Pakete verhindert werden.

Vorteilhafte Ausgestaltungen sind Gegenstand der Unteransprüche.

Die Brückeneinrichtung kann eine reziproke Übersetzungseinrichtung aufweisen, welche zur Übersetzung der Zieladresse und der Herkunftsadresse ausgebildet ist, wobei die Adressen durch die Übersetzungseinrichtung rückübersetzbar sind. Dadurch können die von der Übersetzungseinrichtung verwendeten Adressräume in den einzelnen PCle-Bus-Hierarchien unabhängig voneinander ausgestaltet werden.

Die Brückeneinrichtung kann vorsehen, dass Nachrichten, zu denen die Übersetzungseinrichtung keine Anweisungen zur korrekten Übersetzung aufweist, verworfen werden.

In einer weiteren Ausgestaltung kann die Übersetzungseinrichtung eine Zuordnungseinrichtung aufweisen, mittels der eine Adressidentifikationskennzahl einer Adresse zu Übersetzung der Zieladresse und/oder der Herkunftsadresse zuordenbar ist. Dadurch ist es möglich, für eine Datenübertragung zwischen den beiden Hierarchien vorbestimmte Adressbereiche (Pools) vorzusehen, die für diesen Zweck reserviert sind. Des Weiteren ist es, sofern die Datenübertragung nur mittels dieser Pools erlaubt wird, nicht mehr möglich, durch Veränderung der Zieladressen gewollt oder ungewollt fremde Speicherbereiche in einer fremden Hierarchie zu überschreiben.

Die Brückeneinrichtungen können nichtflüchtige Speichereinrichtungen mit Informationen zur Konfiguration der Brückeneinrichtungen aufweisen. Dadurch ist insbesondere beim Systemstart gewährleistet, dass die Konfiguration der Brückeneinrichtungen korrekt ist und keine Fehlfunktion oder böswillige Fehlinformation innerhalb einer Hierarchie die Funktion der Brückeneinrichtung beeinträchtigen kann.

Zwischen den Brückeneinrichtungen und den PCle-Hierarchien können Wächtereinrichtungen zur Überwachung der von der Brückeneinrichtung übermittelten Nachrichten angeordnet sein. Derartige Wächtereinrichtungen erkennen, beispielsweise mittels einer Zuordnungstabelle, ob die in einer Nachricht enthaltene Zieladresse auf diesem Arm der Hierarchie überhaupt vorkommen darf. Eine solche Wächtereinrichtung kann beispielsweise auch erkennen, ob eine Nachricht, welche von einer Brückeneinrichtung ausgesandt wird, eine Herkunftsadresse aufweist, die dieser Brückeneinrichtung zugewiesen ist. Ist dies nicht der Fall, so verwerfen die Wächtereinrichtungen die Nachricht. Dadurch werden wiederum die an die Brückeneinrichtung angeschlossenen PCle-Bus-Hierarchien geschützt.

Wenigstens eine der Kommunikationseinrichtungen kann eine Übersetzungseinrichtung zur Abbildung mehrerer Adressbereiche der angeschlossenen PCle-Hierarchie in den Adressbereich der Kommunikationseinrichtung aufweisen. Da die Brückeneinrichtungen gewöhnlich zusammenhängende Adressbereiche aus einer PCle-Hierarchie in einer anderen PCle-Hierarchie einblenden, kann es nützlich sein, wenn mehrere Peripheriegeräte jeweils einen kleinen Teil dieses zusammenhängenden Adressbereichs verwenden. Somit wird vermieden, dass für jede Einzelfunktion eines einzelnen Peripheriegeräts eine eigene Brückeneinrichtung verwendet werden muss.

Die Übersetzungseinrichtung kann eine Abbildungswächtereinrichtung aufweisen, welche zur Abweisung nicht erlaubter Nachrichten eine Zuordnungstabelle aufweist, in der erlaubte Kombinationen aus Herkunfts- und Zieladresse ablegbar sind. Ist die Kombination aus Herkunftsadresse und Zieladresse eines Pakets nicht erlaubt, so wird das Paket verworfen. Auch dies dient der besseren Abschottung und Absicherung der PCle-Bus-Hierarchien gegeneinander.

Die Brückeneinrichtung kann virtualisierbar sein. Dadurch ist es möglich, bei Bedarf im Betrieb neue Brückeneinrichtungen in die Adressräume von PCle-Bus-Hierarchien einzubinden.

Die PCle-Bus-Hierarchie kann wenigstens 2-fach redundant ausgeführt sein, wobei die PCle-Bus-Hierarchie Zusammenfüg-/Verteilkomponenten aufweist. Da in einer solchen redundanten Hierarchie jede Nachricht über mehrere unabhängige Kommunikationskanäle übermittelt wird, können Fehler bei der Übertragung zuverlässig erkannt werden. Eine Möglichkeit ist es, die von den Kommunikationskanälen übermittelten Nachrichten miteinander zu vergleichen, und nur dann anzunehmen, wenn alle Kommunikationskanäle dieselbe Nachricht übermittelt haben. Um die Nachrichten für die Kommunikationseinrichtungen transparent auf diese Art und Weise zu übermitteln sind die Zusammenfüg-/Verteilkomponenten (splitter/combiner) vorgesehen. Die Verteilkomponenten nehmen Nachrichten von einer PCle-Kommunikationseinrichtung an und übertragen identische Kopien davon auf mehreren PCle-Übertragungskanälen. Die Zusammenfügkomponenten empfangen diese Nachrichten und sind für den Vergleich, ob die Kopien weiterhin identisch sind, ausgebildet.

Die Kommunikationseinrichtungen können eine Identifikationserzeugungseinrichtung zur Erzeugung einer eindeutigen Identifikationsnummer für PCle-Funktionen aufweisen. Die Kommunikationseinrichtung ist zur Aufnahme der Identifikationsnummer in von ihr erzeugte Nachrichten ausgebildet.

Die Kommunikationseinrichtungen verfügen vorteilhaft über eine Signalisierungseinrichtung zur Ablage wenigstens eines DMA-Bereitschaftssignals.

Die Kommunikationseinrichtung kann zur Aufnahme von Zeitablaufinformationen oder Ungültigkeitsinformationen in von ihr erzeugte Nachrichten ausgebildet sein.

Wie bereits oben ausgeführt ist es eine Aufgabe der vorliegenden Erfindung, die Sicherheit bei der Zusammenschaltung unterschiedlicher PCle-Bus-Hierarchien zu erhöhen.

Zur Lösung dieser Aufgabe wird weiterhin ein Verfahren gemäß Patentanspruch 11 vorgeschlagen.

Bei diesem Verfahren werden zunächst die Brückeneinrichtung und eine Master-CPU hochgefahren. Die Brückeneinrichtungen werden dann durch die Master-CPU konfiguriert. Sobald die Brückeneinrichtungen konfiguriert sind, werden weitere CPUs hochgefahren. Die Brückeneinrichtungen werden dabei insbesondere so konfiguriert, dass andere CPUs außer der Master-CPU keine Konfigurationseinstellungen an den Brückeneinrichtungen vornehmen können. Dadurch ist sichergestellt, dass die weiteren CPUs keine beabsichtigten oder unbeabsichtigten Fehlkonfigurationen der Brückeneinrichtungen verursachen können.

Sofern die Brückeneinrichtungen nichtflüchtige Speichereinrichtungen mit Informationen zur Konfiguration aufweisen, kann diese Konfiguration der Brückeneinrichtungen auch mittels der Informationen aus den nichtflüchtigen Speichereinrichtungen stattfinden. Dies hat den Vorteil, dass mit dem Hochfahren der CPUs nicht so lange gewartet werden muss, bis die Master-CPU ihren Start- und Konfigurationsvorgang abgeschlossen hat.

Im Anschluss an das Hochfahren der CPUs kann eine Feinkonfiguration der Brückeneinrichtungen durch eine Master-CPU erfolgen. Dies ist insbesondere dann nützlich, wenn der Aufbau des Rechnersystems bei Herstellung der nichtflüchtigen Speichereinrichtungen, welche zur Konfiguration der Brückeneinrichtungen verwendet werden noch nicht vollständig bekannt oder festgelegt ist. In diesem Fall können die nichtflüchtigen Speichereinrichtungen eine Grundkonfiguration enthalten, welche nur der Master-CPU erlaubt, die Brückeneinrichtungen zu konfigurieren.

Darüber hinaus werden die Betriebssicherheit und die Sicherheit in einem Rechnersystem nach einem der Ansprüche 1 bis 10 durch ein Verfahren gemäß Patentanspruch 14 erhöht.

Dabei wird für jede PCle-Funktion mindestens ein kontinuierliches Speicherfenster belegt. Die Speicherfenster werden im Systemspeicherbereich derart angeordnet, dass die Speicherfenster innerhalb jeder einzelnen PCle-Bus-Hierarchie nicht überlappen. Dadurch ist es bei Speicherfenstern, die von einer PCle-Funktion nicht vollständig verwendet werden, nicht mehr möglich, den nicht genutzten Bereich für eine andere Funktion zu verwenden. Die einzelnen Speicherfenster sind somit immer exakt einer PCle-Funktion zugeordnet und können sicher für andere PCle-Bus-Hierarchien freigegeben werden.

Die Erfindung wird nachfolgend anhand von Ausführungsbeispielen näher erläutert, die in den beigefügten Figuren schematisch dargestellt sind. Es zeigen im Einzelnen:
- Fig. 1: ein Schema einer Rechnersystemarchitektur;
- Fig. 2: ein Schema einer alternativen Architektur eines Rechnersystems;
- Fig. 3: ein Schema einer Adressabbildung eines Systems, bei dem ein SR-IOV-Gerät gemeinsam genutzt wird;
- Fig. 4: eine schematische Darstellung einer PIO-Transaktion in einem System mit NTB;
- Fig. 5: eine schematische Darstellung einer DMA-Transaktion in einem System mit NTB;
- Fig. 6: eine schematische Darstellung einer DMA-Transaktion in einem System mit NTB unter Verwendung einer reziproken Adressabbildung;
- Fig. 7: eine schematische Darstellung einer DMA-Transaktionen in einem System mit NTB unter Verwendung von vordefinierten Schreib-/Lesepools;
- Fig. 8: ein Flussdiagramm einer Startsequenz unter Verwendung einer geeigneten Einschaltsequenz;
- Fig. 9: ein Schema eines Beispielsystems mit NTB unter Verwendung einer dedizierten, in einem EEPROM gespeicherten Konfiguration;
- Fig. 10: ein Flussdiagramm einer Startsequenz unter Verwendung einer in einem dedizierten EEPROM gespeicherten Konfiguration;
- Fig. 11: Ein Schema eines Beispielsystems mit NTB unter Verwendung eines PCle-Wächters oder -Monitors;
- Fig. 12: ein Flussdiagramm einer Startsequenz unter Verwendung eines PCle-Wächters oder -monitors;
- Fig. 13: ein Schema eines Beispielsystems mit einem Ein-/Ausgabegerät, das mehrere Busnummern aufnimmt (4 SR-IOV-Endpunkte zu je 8 Funktionen -> 32 Funktionen);
- Fig. 14: eine Übersicht über die Abhängigkeit der VF BARs von der in der PF definierten BAR;
- Fig. 15: ein Schema überlappender Adressabbildungen von VFs unterschiedlicher Geräte, auf die eine CPU zugreifen will (Beispielsystem mit 3 CPUs, die 2 SR-IOV-Endpunkte gemeinsam nutzen);
- Fig. 16: ein Schema einer gemeinsamen Nutzung mehrere SR-IOV-Geräte in einem System mit NTB unter Verwendung einer kontinuierlichen Adressabbildung von VFs unterschiedlicher Geräte, auf welche die CPU zugreifen will (Beispielsystem mit 3 CPUs, die 2 SR-IOV-Endpunkte gemeinsam nutzen);
- Fig. 17: ein Schema einer gemeinsamen Nutzung mehrerer SR-IOV-Geräte in einem System mit NTB unter Verwendung eines zusätzlichen Abbildungswächters in Richtung der EA-Geräte (Beispielsystem mit 3 CPUs, die auf 2 SR-IOV-Endpunkte gemeinsam zugreifen);
- Fig. 18: ein Beispielsystem mit NTB unter Verwendung zusätzlicher PCle-(Protokoll)-Wächter;
- Fig. 19: ein Schema eines weiteren möglichen Beispielsystems;
- Fig. 20: ein Schema eines Beispielsystems mit Wächtereinrichtungen und einem zusätzlichen CRC-Dienst
- Fig. 21: ein Schema eines Beispielsystems mit redundantem PCle-Netzwerk und splitter / combiner-Komponenten in Hardware und
- Fig. 22: ein Schema eines Beispielsystems mit einem redundanten PCle-Netzwerk und splitter / combiner Komponenten in Software.

Eine bevorzugte Anwendung liegt auf dem Gebiet der IT-Sicherheit (Prozesssicherheit, Verfügbarkeit und/oder Datensicherheit - insbesondere hinsichtlich sicherem und korrektem Zugriff und Erhalt der Daten) und insbesondere der IT-Sicherheit bei gemischt-kritischen Anwendungen, die unterschiedliche Anforderungen hinsichtlich Sicherheit und Verfügbarkeit haben. Die Erfindung ist insbesondere geeignet für hinsichtlich Sicherheit, Verfügbarkeit und Datensicherheit kritische Echtzeit-Systeme (insbesondere Embedded-Systeme) oder auch für hinsichtlich Sicherheit, Verfügbarkeit und Datensicherheit kritische Nicht-Echtzeitsysteme (insbesondere Embedded-Systeme). Ganz besonders trifft dies auf den Anwendungsbereich der Luftfahrt zu (z.B. onboard oder am Boden oder als Schnittstelle Boden-Board).

Im Folgenden werden einige hier insbesondere verwendete Begriffe definiert. Aufgrund der hier üblichen Fachsprache werden auch einige aus dem Englischen stammende Begriffe verwendet, deren Bedeutung dem hier zuständigen Fachmann, auch dem deutschsprachigen Fachmann, ohne weiteres geläufig ist.

"Partition" ist ein Ausdruck, der hauptsächlich in Echtzeitsystemen verwendet wird, um eine in sich abgeschlossene oder eigenständige Laufzeit-Umgebung mit strikter Trennung von Speicher-Ressourcen, CPU-Zeit-Ressourcen und IO-Ressourcen (IO-Input/Output, d.h. Eingang/Ausgang) zu beschreiben[1].

Ein Sicherheitsbereich (auch Security Domain) enthält und verarbeitet Daten, die in der gleichen Sicherheitsstufe klassifiziert sind. Ein Sicherheitsbereich ist eine Zusammenstellung von einer oder mehreren Partitionen.

Als "virtuelle Maschine" (auch kurz VM) wird insbesondere ein isoliertes Gastsystem innerhalb eines Host-Rechnersystems verstanden.

Unter "Virtuelle-Maschinen-Monitor" oder "Virtual Machine Monitor" (im Folgenden kurz VMM) oder "Hypervisor" (im Folgenden auch kurz "Hyp") wird insbesondere eine Systemebene verstanden, die durch Ressourcen - wie Hardware und Zeit - definierte virtuelle und eingeschlossene Prozessumgebungen für Gastsysteme bereitstellt. Hierdurch können mehrfache Instanzen einer Vielfalt von Untersystemen (virtualisierte) Hardware-Ressourcen untereinander teilen, d.h. gemeinsam nutzen. Das Verwalten der Ausführung der Gast-/Untersysteme ist eine Hauptaufgabe des VMM (dieser wird daher auch zuweilen als "Virtual Machine Manager" bezeichnet).

Unter "Mikrokern" (Betriebssystem) [auch Engl.: micro kernel (operating system)] wird insbesondere ein Minimum an Software verstanden, die zur Implementierung eines Betriebssystems (im Folgenden auch kurz OS für Operating System) benötigt wird. Dazu gehören insbesondere eine Speicherverwaltung (memory management), eine Prozessverwaltung (thread management) und eine Zwischen-Prozess-Kommunikation (inter-process communication, im Folgenden auch kurz IPC). Alle zusätzlichen typischen Dienste eines Betriebssystems laufen als normale Prozesse (wie z.B. Gerätetreiber, Protokollstapel (protocol stacks), Dateisysteme (file systems)) außerhalb des Mikrokerns.

Unter "Separation Kernel" (Betriebssystem), auch kurz SK genannt, wird insbesondere eine Art Mikrokern verstanden, der für einen Schutz/eine Trennung (engl. separation)/eine Aufteilung (engl. partitioning) von Ressourcen, eine Steuerung des Informationsflusses zwischen Partitionen und/oder einen Prüfdienst sorgt.

"PIO" oder "programmed IO" ist gewöhnliche Art, zu einem Peripheriegeräte zuschreiben oder davon zu lesen. Die CPU steuert die Transaktionen selbst mittels ihrer Schreib/Leseoperationen.

"DMA" anders als bei PIO, werden bei DMA-Technologie die Speichertransaktionen oder Transfers von dem Peripheriegerät selbst dadurchgesteuert, das ist Master wird und die Transaktionen unabhängig von der CPU durchführt. Dies entlastet die CPU und führt zu einer besseren Systemleistung.

"MMU" (memory management unit) / "IOMMU" (IO Memory Management Unit): die Hauptaufgabe einer MMU ist es, die Zugriffe auf virtuelle Adressen, die ein Prozessor oder eine laufende Applikation verwendet, in physikalische Adressen des Systemspeichers zu übersetzen. Diese Übersetzung erlaubt eine sichere Speicherseparierung von unterschiedlichen Applikationen oder Prozessen, die auf einem Prozessor laufen. Die MMU kann nur Zugriffe von der CPU in Richtung auf den Systemspeicher verwalten (siehe PIO).

Wenn Speichertransaktionen (Lesen oder Schreiben) von Ein-/Ausgabegeräten in Richtung auf den Systemspeicher stattfinden, beispielsweise DMA, dann werden diese Transaktionen nicht von der MMU verwaltet. Für DMA-Zugriffe wird eine weitere MMU benötigt - die so genannte IOMMU.

"SR-IOV" ist eine standardisierte Erweiterung des PCle-Standards (Peripheral Component Interconnect express) der PCI SIG (Peripheral Component Interconnect Special Interest Group) für hardwareunterstützte EA-Virtualisierung in Einzelbaum-PCle-Hierarchien, beispielsweise in einer PCle-Hierarchie mit einer CPU. Um gemeinsame Nutzung zu erlauben, wird die PCle-Schnittstelle eines SR-IOV-Geräts in mehrere Teile, die Funktionen genannt werden, aufgeteilt. Genauer wird die PCle-Schnittstelle in einen Verwaltungsteil (physikalische Funktion (PF) genannt) und mehrere Applikationsteile (virtuelle Funktionen (VF) genannt) aufgeteilt (siehe [2]).

"MR-IOV" ist eine standardisierte Erweiterung des PCle-Standards der PCI SIG für hardwareunterstützte EA-Virtualisierung in Mehrbaum-PCle-Hierarchien (multi root PCle hierarchies), beispielsweise für eine PCle-Hierarchie mit mehreren CPUs (siehe [3]).

"NTB" (non-transparent bridge): Eine nicht-transparente Brücke (NTB) sieht für eine Einzelbaum-PCle-Hierarchie wie ein Endgerät aus. Werden zwei Einzelbaum-PCle-Hierarchien unter Verwendung eines NTB verbunden, so werden die beiden Hierarchien separiert. Daher können keine Rückwärtsanforderungen oder Konfigurationsanforderungen solch eine Brücke passieren. Ein NTB kann als zwei Endpunkte angesehen werden, die Rücken an Rücken mit einer ID und einer Adressübersetzungsfunktionalität versehen werden. Der NTB öffnet eine Adressöffnung von einer PCle-Einzelbaum-Hierarchie zu der anderen PCle-Einzelbaum-Hierarchie und baut somit eine Mehrstamm-Hierarchie auf (siehe [4], [5]).

Im Bereich der Luft- und Raumfahrt und insbesondere im Bereich der Luftfahrt gibt es ein immer dringenderes und vergrößertes Bedürfnis nach neuen und zusätzlichen IT-Diensten wie z.B. Passagier-Vernetzung, Auslagerung von Wartungsdaten zur Analyse oder Zur-Verfügung-Stellen von Flugsystem-Informationen. Dieser Trend verlangt nach einer ausgedehnten Konnektivität unter eingebetteten Luftfahrt-Untersystemen selbst und zwischen Bodensystemen und Avionik-Systemen am Luftfahrzeug. Zusammen mit dem Trend einer dichteren Integration von Funktionalitäten mit unterschiedlichen Sicherheits- und Verfügbarkeitskriterien auf einer einzelnen Rechnerplattform führt dies dazu, dass neue Strategien, Architekturen und Infrastrukturen betreffen Betriebssicherheit und Sicherheit benötigt werden. Diesem Problem wird dadurch begegnet, dass die Systemfunktionalität in kleinere, verifizierbare Komponenten unterteilt wird, wobei diese Komponenten durch Partitionierung von Ressourcen in virtuellen Maschinenumgebungen separiert werden und sicher gemeinsam nutzbare Hardwarebeschleuniger oder Coprozessoren und Ein-/Ausgabegeräte verwendet werden.

Beispiele für solche Hardwarebeschleuniger oder Coprozessoren können im Bereich der Signal- und Bildverarbeitung gesehen werden, beispielsweise Codecs (wie H.264/MPEG2), Fehlerkorrekturen, Kollisionsdetektion und mathematische Operationen (wie beispielsweise FFT, DCT, DWT).

Darüber hinaus ist diese Herangehensweise auch für Coprozessoren oder Beschleuniger von Sicherheitsanwendungen, beispielsweise Kryptoprozessoren oder vertrauten Plattformmodulen ("trusted platform modules", TPM) anwendbar.

Ein weiteres Anwendungsgebiet ist die Beschleunigung von Netzwerkanwendungen, beispielsweise Sicherheitsgateways/Firewalls/Paketfiltern, Netzwerküberwachung oder Einbruchsdetektoren.

Schließlich kann dieses Konzept auch dazu genutzt werden, auf sichere Art und Weise Ein-/Ausgabegeräte an die virtuellen Maschinen zu verteilen und die Bandbreite zu teilen.

Allgemein erlaubt es die vorliegende Erfindung, Ein- und Ausgabegeräte, Hardwarebeschleuniger oder Coprozessoren in einem Mehrprozessorsystem zu teilen, beziehungsweise gemeinsam zu benutzen. Jeder der Prozessoren kann eine Mehrzahl von Kernen umfassen, die Echtzeit- und Nicht-Echtzeit Applikationen unterschiedlicher Kritikalität in virtuellen Maschinen ablaufen lassen. Darüber hinaus stellt die vorliegende Erfindung eine sicher separierte oder isolierte unmittelbare Verbindung zwischen diesen Ein- und Ausgabegeräten, Hardwarebeschleunigern oder Coprozessoren zu virtuellen Maschinen innerhalb dieses Mehrkern- und Mehrprozessorcomputersystems bereit. Durch unmittelbare Verbindungen zu den virtuellen Maschinen und konsistente Verwendung von DMA minimiert die vorliegende Erfindung die notwendige Inaktivität der Softwareverwaltungsebene (beispielsweise der VMM).

Die vorliegende Erfindung demonstriert insbesondere ein Konzept, bei dem DMA sicher in Systemen verwendet werden kann, in denen PCle SR-IOV-Geräte in einer Mehrzahl von Einzelstamm-PCle-Hierarchien, die durch NTBs miteinander verbunden sind, gemeinsam verwendet werden. Zusätzlich zu diesem sicheren DMA-Konzept wird beschrieben, wie mehrere SR-IOV-Geräte sicher von einer Mehrzahl von Einzelstamm-PCle-Hierarchien, die durch NTBs verbunden sind, gemeinsam verwendet werden können.

Die Idee verwendet unter anderem Softwarepartitionierung (unter Verwendung von virtuellen Maschinen), hardwaregestützte PCle IO-Virtualisierung (PCle SR-IOV), gemeinsame Nutzung von PCle-Geräten in mehrfachen Hierarchien durch NTBs, PCle Domänen- oder Hierarchieseparation oder -isolation mittels NTBs und Adressraumseparation und Steuerung durch MMUs, IOMMUs oder Wächter.

Die MR-IOV-Erweiterung des PCle-Standards schlägt ein Konzept zur gemeinsamen Nutzung von PCle-Geräten in einer Mehrstamm-Umgebung vor (siehe [3]). MR-IOV basiert auf weit reichenden Veränderungen der gesamten PCle Protokollebenen (Transaktionsebene und Verbindungsebene) und benötigt Endpunkte und Schalter (Switches), denen MR-IOV bekannt ist. Diese Geräte sind noch nicht verfügbar und es ist unwahrscheinlich, dass sie in den nächsten Jahren verfügbar werden. Daher werden zusätzliche Konzepte benötigt, um die Zeit bis zur Verfügbarkeit von MR-IOV Technologie zu überbrücken, die mit verfügbaren PCle- und SR-IOV-Geräten und PCle-Schaltern/Switches kompatibel sind.

Es ist bekannt, NTBs dazu zu verwenden, mehrere PCle-kompatible Einzelstammhierarchien, ein PCle-Gerät (siehe [5]) oder SR-IOV PCle-Geräte (siehe [6]) gemeinsam nutzen zu lassen.

In [7] wird die Idee des NTB durch mehrere Switching-Stufen erweitert, um zum Lastenausgleich mehrfache Pfade durch die Infrastruktur bereitzustellen.

Darüber hinaus zeigen Johnson und andere (siehe [8]) mehrere Systemarchitekturen, bei denen mit NTBs PCle Geräte von mehreren Einzelstamm PCle-Hierarchien gemeinsam genutzt werden. Zusätzlich wird auf das Problem der Verwendung eines Ende-zu-Ende-CRC (ECRC) in Systemen mit NTBs aufmerksam gemacht und eine Lösung für dieses Problem aufgezeigt. Darüber hinaus wird eine MR-IOV-ähnliche Erweiterung des PCle-Protokolls beschrieben (Hinzufügen und Entfernen der besonderen Protokollerweiterungen innerhalb des Switch), um die gemeinsame Nutzung von PCle-Geräten zu erlauben. Daneben wird RDMA (remote DMA) diskutiert und vorgeschlagen, eine PCle-zu-Infiniband-Brücke unter Verwendung von DMA-Diensten von Infiniband durch den vorgestellten Türklingelmechanismus zu verwenden. Eine Lösung, die DMA in PCle-Hierarchien, die durch NTBs verbunden sind, verwendet, ist nicht beschrieben.

Ferner diskutieren Higuchi und andere (siehe [9]) die gemeinsame Nutzung von SR-IOV-Geräten in mehrfachen PCle-Hierarchien mit dem Fokus darauf, intransparentes Verhalten beim Systemstart zu eliminieren, das die gemeinsame Nutzung von GPUs verhindert und diskutieren Möglichkeiten, für die Systemsteuerung eine Fehlertoleranz zur Verfügung zu stellen.

Darüber hinaus wird auch in [10] die gemeinsame Nutzung von SR-IOV-Geräten behandelt. Allerdings ist das Kerngebiet, die Fehlertoleranz dadurch zu verbessern, dass die Migration von virtuellen Funktionen von SR-IOV-Geräten mit NTBs zwischen einzelnen PCle-Hierarchien ermöglicht wird.

Die vorliegende Erfindung kombiniert einige dieser Technologien und erweitert sie um ein sicheres DMA-Konzept über NTBs und durch ein sicheres Konfigurationsverfahren, um eine gesicherte Separation und Isolation zwischen den virtuellen Maschinen zu erlauben, welche die gemeinsam genutzten Geräte verwenden.

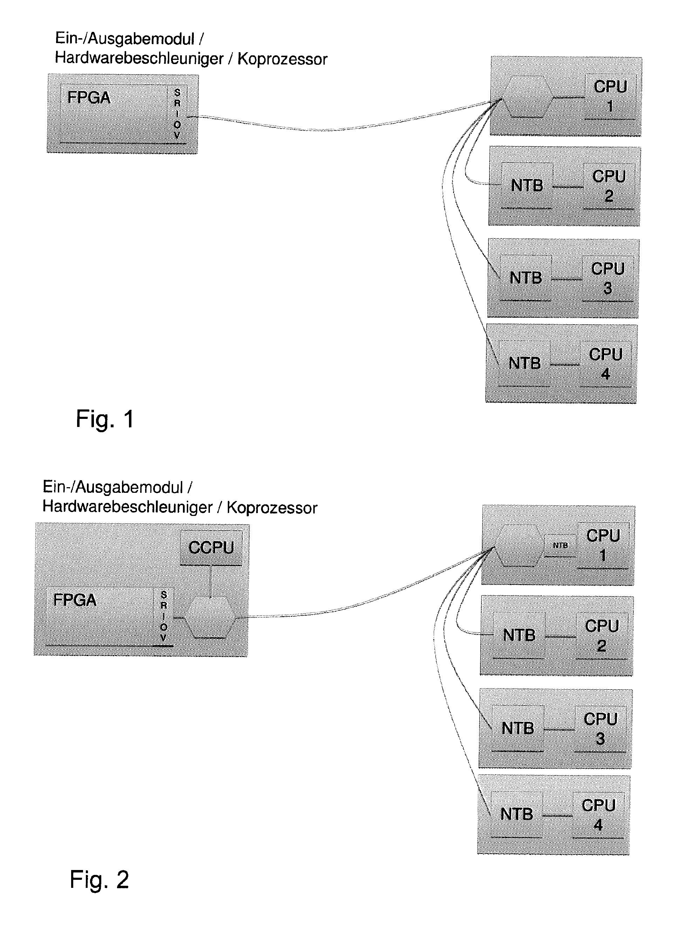

Die Erfindung wird am Beispiel einer Rechnerarchitektur gezeigt, die einem Blade-Server ähnlich ist. Derartige Blade-Systeme weisen eine Vielzahl von Rechenmodulen auf, die eine gemeinsame Infrastruktur, beispielsweise Stromversorgung oder Ein-/Ausgabegeräte, Hardwarebeschleuniger oder Coprozessormodule (im Folgenden teilbare Geräte oder gemeinsam nutzbare Geräte genannt) gemeinsam nutzen. Fig. 1 zeigt eine vereinfachte Version eines solchen Systems mit vier Rechenmodulen und einem teilbaren Gerät.

Jedes der Rechenmodule umfasst einen Prozessor (CPU), der ebenfalls mehrere Rechenkerne aufweisen kann.

Die Verbindung der Rechenmodule und der teilbaren Gerätemodule wird durch PCle durchgeführt. Einfaches PCle ist nur dazu in der Lage, eine einzelne CPU mit PCle Endpunkten zu verbinden. Daher werden NTBs verwendet, um mehrere Einzel-PCle-Hierarchien miteinander zu verbinden, um eine Mehrstamm-PCle-Hierarchie zu erstellen (siehe [5]). Das Hauptrechenmodul (Master) hat einen PCle-Switch, der alle anderen PCle-Geräte verbindet. Außerdem ist es vorstellbar, dass der PCle-Switch in der Backplane angeordnet ist oder dass ein Switch einen oder mehrere NTBs beinhaltet oder dass sogar mehrere Switches existieren

Es wird angenommen, das ein gemeinsam benutzbares Gerät ein PCle SR-IOV Gerät mit eingebauter Hardwarebeschleunigung für Virtualisierung ist (siehe [2]). Fig. 1 beschreibt eine Ausführungsform eines solchen Gerätes als eine Ein-/Ausgabe Karte mit einem FPGA, welches eine PCle SR-IOV-Schnittstelle und die eigentliche gemeinsam benutze Funktionslogik beinhaltet.

Mehrere Partitionen oder virtuelle Maschinen mit unterschiedlichen Kritikalitäten hinsichtlich Betriebssicherheit und Sicherheit laufen auf jeder CPU. Die Ressourcenverwaltung wird von einer VMM, Hypervisor oder Separation Kernel durchgeführt.

In der in Fig. 2 gezeigten alternativen Ausführungsform der Systemarchitektur wird ein dedizierter Steuerungsprozessor als Systemsteuerung verwendet. Eine solche Struktur kann verwendet werden, wenn das Hauptrechenmodul (CPU 1) eine Komplexität erreicht, die bewirkt, dass das Rechenmodul nicht mehr als vertrauenswürdig angesehen werden kann.

Die folgende Beschreibung bezieht sich auf das in Fig. 1 gezeigte System.

Die Einzigartigkeit liegt in der Erweiterung der Systemarchitektur in einer Art und Weise die gemeinsame Nutzung eines SR-IOV-Geräts zu ermöglichen, in der eine effiziente und sichere Separierung gewährleistet wird. Dazu werden Softwarepartitionierung (VMs), hardwareunterstützte PCle Ein-/Ausgabevirtualisierung (PCle SR-IOV), gemeinsame Nutzung von PCle-Geräten in mehrfachen Hierarchien mittels NTB, Separierung/Isolierung der PCle-Hierarchien durch NTBs, sowie eine Separierung des Adressraums und dessen Steuerung durch MMUs, IOMMUs und/oder Wächtereinrichtungen verwendet.

Effiziente Leistung wird durch die Verlagerung der Virtualisierungsebene von bisher üblichen Softwarelösungen auf die Hardware in der PCle SR-IOV-Schnittstelle, durch die unmittelbare Adressabbildung auf die VMs ohne Interaktion von VMM/Hypervisor/Separation Kernel und durch die konsistente Nutzung von DMA erreicht.

Systeme ohne Softwarevirtualisierung oder virtualisierte Systeme auf Basis eines monolithischen Hypervisor/VMM werden in Sicherheitsaspekten von Separation Kernels übertroffen. In der Regel erreichen Separation Kernels, die wie bereits erwähnt auf Mikrokernarchitekturen basieren, höhere Sicherheitszertifizierungsebenen als monolithische Ressourcenmanager (EAL4 und darüber, siehe auch [11]). Übliche VMMs oder Hypervisoren verwenden MMUs, um die Separierung sicherzustellen. Dies ist jedoch nur für PIO-Transfers (in der Richtung von der CPU zu dem Ein-/Ausgabegeräten) anwendbar. Um Transaktionen in dem Adressraum von Ein-/Ausgabegeräten in Richtung der CPU (beispielsweise DMA) zu separieren sind IOMMUs verfügbar (beispielsweise Intels VT-d [12]), aber nicht weit verbreitet. Anstatt von MMUs sind auch dedizierte Hardwarewächtereinrichtungen mit Adressabbildungsfunktionalität (in Richtung der CPU) denkbar, insbesondere für Prozessorsysteme, die keine derartige IOMMU-Komponente haben. Aufgrund der Einfachheit bezieht sich die folgende Beschreibung nur auf den Begriff IOMMU, wobei zu beachten ist, dass diese Funktionalität auch als dedizierte Wächtereinrichtung mit Abbildungsfunktionalität implementiert werden kann (Abbildungswächter).

NTBs verbinden Einzelbaum-PCle-Hierarchien miteinander, so dass eine Mehrbaum-Hierarchie entsteht, welche die gemeinsame Nutzung von PCle-Geräten erlaubt. Ein weiteres interessantes Merkmal von NTBs ist, dass Konfigurationsanforderungen und Zurücksetzungen über NTBs impliziert blockiert werden. Dieses separiert eine Einzelbaum-PCle-Hierarchie in eine separierte Fehlereindämmungszone, was diese Technik zur Erwägung von Betriebssicherheits- und Sicherheitsaspekten interessant macht. Diese NTBs öffnen eine Adresseöffnung von einer Einzelbaum-PCle-Hierarchie in eine andere Einzelbaum-PCle-Hierarchie. Das bedeutet, dass durch die Verwendung von NTBs die Separierung von DMA-Zugriffen von einem gemeinsam genutzten SR-IOV Gerät zu virtuellen Maschinen, die auf der CPU einer anderen Einzelbaum-PCle-Hierarchie laufen, nicht sichergestellt werden kann.

Dies kann durch zwei neue Ansätze gelöst werden.

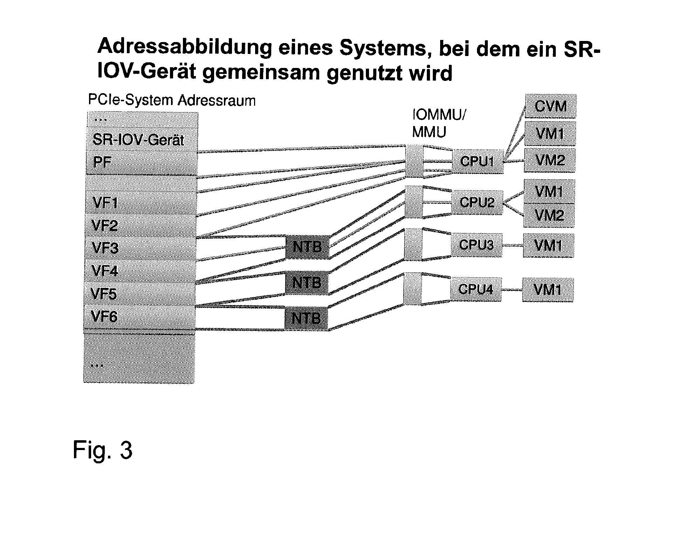

Zunächst können die CPUs 2 bis 4 (siehe Fig. 3) durch mehrere NTBs pro CPU mit dem PCle-Switch der Einzelbaum-PCle-Hierarchie verbunden werden, welche das gemeinsam nutzbare Gerät enthält. Es ist nicht einfach, diese Lösung kostengünstig und mit guter Skalierungsfähigkeit bereitzustellen.

Ein weiterer Ansatz ist die Virtualisierung eines NTB einer bestimmten Einzelbaum-PCle-Hierachie, um mehrere NTBs zu emulieren.

Der dritte Ansatz, um dieses Problem der Separierung von DMA-Transaktionen zu virtuellen Maschinen zu lösen ist, die NTB-Separierung um die zusätzliche IOMMU-Separierung zu erweitern.

Das Beispiel zeigt das Szenario eines PCle-SR-IOV-Geräts mit 1 PF (physische Funktion) und 6VF (virtuelle Funktionen), das sicher gemeinsam genutzt wird, indem NTB-Separierung erweitert um IOMMU-Separierung angewendet wird. CPU 1 ist der System-Master. Fig. 3 deutet an, dass ein Separation Kernel auf CPU 1 die PF, die Verwaltungsschnittstellen der SR-IOV-Geräte steuert (siehe CVM, controller of virtual machines). Der Zugriff von PF, VF1 und VF2 auf CVM, VM1 und VM2 wird von der MMU bzw. IOMMUsepariert. CPU 2 erhält mit Hilfe seiner NTB nur Zugriff auf VF3 und VF4. Die Separierung von VF3 und VF4 zu VM 1 und VM 2 von CPU 2 wird weiter durch die MMU bzw. IOMMU von CPU 2 separiert.

Eine mögliche Implementierungsauspräung der IOMMU ist es, die angewendete PCle-Funktions-ID in derAnforderung-ID des PCle-Paket-Kopfes in ihren Abbildungstabellen nachzuschlagen (beispielsweise Intel VT-d, siehe [12]), um anhand derer den Zugriff zu erlauben oder zu verweigern. Dies ist möglich, da die NTB die Funktion-ID nicht mitübersetzt (siehe [5]; Completer Only Behind Non-transparent Port).

System, das ein einzelnes SR-IOV Gerät gemeinsam nutzt/sicheres DMA-Konzept unter Verwendung von NTBs:

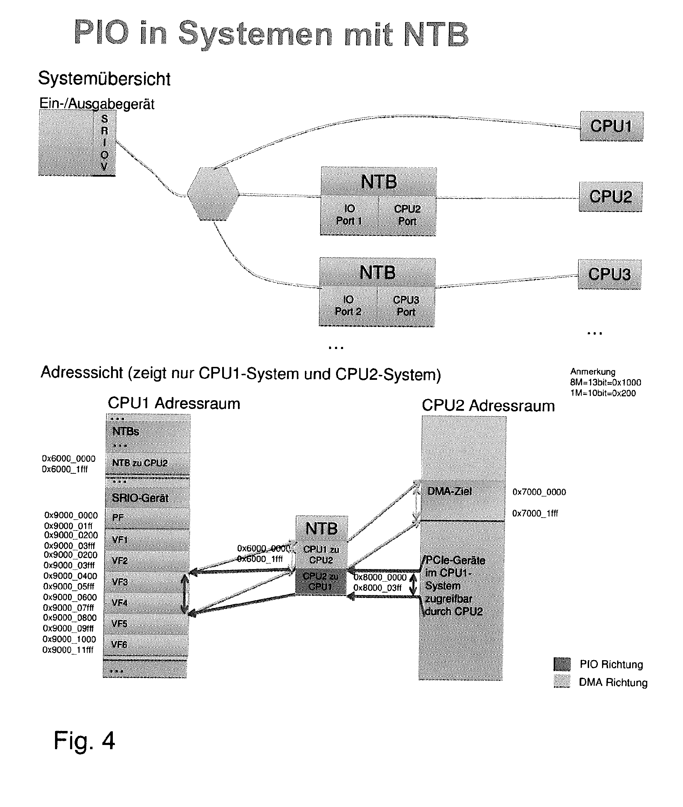

Um das Problem der Verwendung von DMA in Systemen mit NTBs zu verstehen, wird zunächst ein gewöhnlicher PIO-Zugriff diskutiert (siehe Fig. 4). Als ein Beispiel für einen gemeinsamen PIO-Zugriff möchte CPU 2 die Adresse 0x8000_0000 unter Verwendung von PIO lesen.

Die NTB übersetzt die Zieladresse von 0x8000_0000 in die zugeordnete Adresse der korrespondierenden VF des Ein-/Ausgabegeräts (in diesem Fall 0x9000_4000). Da Antwortpakete (PCIe completion requests) zu Anforderungspaketen (PCIe requests) auf Basis der Anforderungs-ID weitergeleitet (Bus-ID, Geräts-ID, Funktions-ID) (siehe [13], [5]), wird diese Anforderungs-ID ebenfalls übersetzt (siehe [5]; Completer Only Behind Non-transparent Port). Das gemeinsam nutzbare Gerät (siehe IO dev in Fig. 4) schickt das angeforderte Datenpaket (PCle completion packet) an die übersetzte ID als Ziel zurück. Die NTB übersetzt die ID zurück in die ursprüngliche ID. Schließlich wird das Paket an das tatsächliche Ziel weitergeleitet. Das gleiche gilt auch für eine PIO Schreib-Transaktion. Zusammengefasst ist PIO-Zugriff mittels der Übersetzungsfunktionalität des NTB möglich.

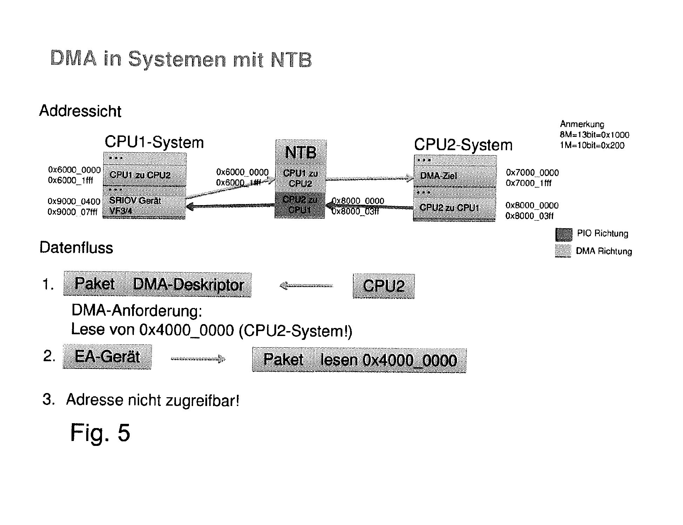

DMA in einem System, das NTBs benutzt, zu verwenden, führt zu einem Problem (siehe Fig. 5).

Als Fallstudie möchte CPU 1 einen DMA-Deskriptor an das gemeinsam nutzbare Gerät senden, um einen bestimmten Adressbereich innerhalb des CPU 2-Adressraums (beispielsweise 0x4000_0000 bis 0x4000_1000) zu lesen. Wenn das gemeinsam nutzbare Gerät versucht, auf 0x4000_0000 zuzugreifen wird dies fehlgeschlagen, da kein gültiger Endpunkt innerhalb des Adressraums des CPU 1-Systems adressiert werden kann. Dies gilt auch für eine DMA-Schreibanforderung.

### Lösung 1:

Eine Lösung für dieses DMA Problem über NTB ist, dass die vollständige Speicherabbildungskarte des Systems unter allen Subsystemen verteilt und synchronisiert werden muss. Vom Standpunkt der Betriebssicherheit und Sicherheit ist dies unerwünscht.

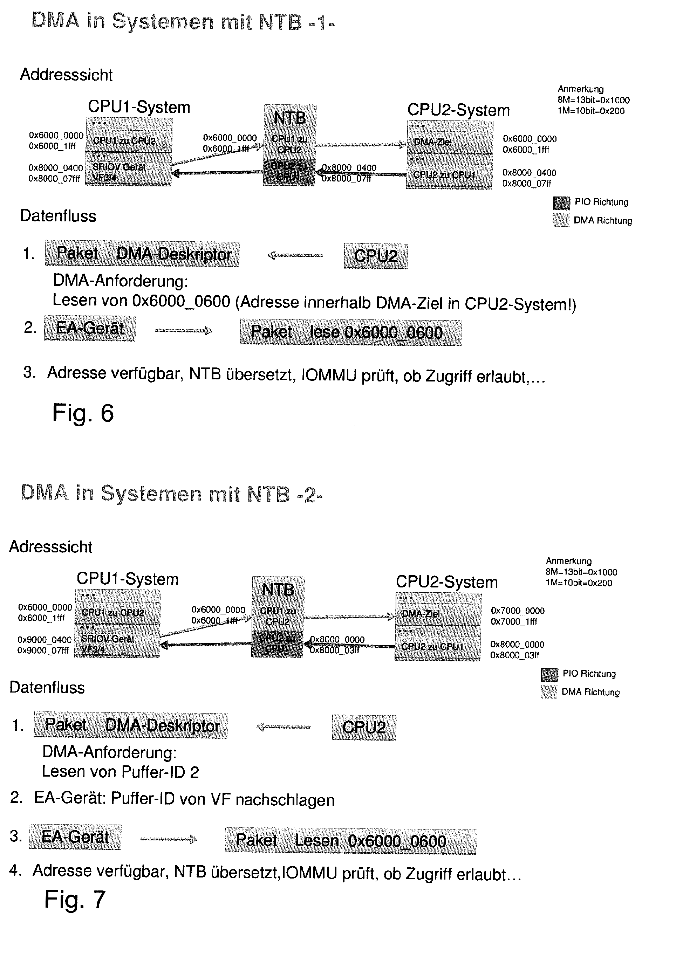

Eine anwendbare Herangehensweise besteht in der Verwendung einer reziproken Adressabbildung. Das bedeutet, dass die Adressabbildung des Ein-/Ausgabegeräts und NTB-Ports (CPU 1 zu CPU 2-Port) in dem CPU 1-System reziprok zu dem DMA-Ziel und NTB-Port (CPU 2 zu CPU 1-Port) in dem CPU-2-System konfiguriert ist. Dieses Konzept ist auch in Fig. 6 gezeigt.

Obwohl die Herangehensweise der Verwendung einer reziproken Adressabbildung anwendbar ist, hat sie Nachteile. Die Adressabbildung des NTB-Ports (CPU 1 zu CPU 2) des CPU-Systems 1 muss denselben Wert wie das DMA-Ziel in dem CPU 2-System haben. Dies führt zu einer gewissen Inflexibilität. Die Verwendung von heterogenen Prozessorarchitekturen und Betriebssystemen, die NTBs nicht kennen, können die Verwendbarkeit eines solchen Konzepts einschränken.

### Lösung 2:

eine weitere Herangehensweise ist die Verwendung von vordefinierten DMA-Schreib- und Lesepools. Die Puffer dieser Pools verwenden relative Adressen oder Größenparameter, die pro VF konfigurierbar sind. Die Basisadressen für die VFs werden in der PF mittels des vertrauenswürdigen Systemmasterrechners (CPU 1) konfiguriert. Der Systemmaster ist auch für das initiale PCle Hierarchie Set-up während des Boot-Vorgangs (PCIe enumeration) und für die Konfiguration der NTBs verantwortlich. Daher kann der Systemmaster die benötigten Basisadressen sammeln. Die Abfolge dieses Set-up während des Boot-Vorgangs wird später beschrieben.

Ein Beispiel für eine VF, die einen Pool von 2 Schreibpuffern und 2 Lesepuffern verwendet, wird zur Erklärung dieses Konzepts verwendet. Es wird angenommen, dass der Offset der Schreibpuffer 0x0 ist und dass der Offset der Lesepuffer 0x400 ist. Die Puffergrößen werden mit 0x200 angenommen. Eine Konfiguration wie in Fig. 4 gezeigt wird angenommen (siehe Fig. 7).

Wenn das NTB-Adressfenster eine Basisadresse von 0x6000_0000 hat, führt dies zu den folgenden Pufferadressen (verwendete Adresse = Basisadresse + Offset + Größe):

| | |
|---|---|
| WDMA1 | 0x6000_0000 bis 0x6000_01ff |
| WDMA2 | 0x6000_0200 bis 0x6000_03ff |
| RDMA1 | 0x6000_0400 bis 0x6000_05ff |
| RDMA2 | 0x6000_0600 bis 0x6000_07ff |

Die PF verwaltet die DMA-Puffer einer VF in einer Lese- und einer Schreibdeskriptortabelle, die mit einer Index-ID organisiert ist.

Wenn CPU 2 will, dass das gemeinsam genutzte Gerät einen DMA-Lesezugriff durchführt, schickt sie einfach eine PIO-Anforderung, welche die Deskriptor-ID/Index-ID (beispielsweise ID 2) (siehe Fig. 7) enthält. Das gemeinsam nutzbare Gerät initiiert die Leseanforderung an die Zieladresse 0x6000_0600 und die folgenden Adressen. Der NTB übersetzt die Anforderung in die entsprechende Systemadresse der CPU 2, wobei die IOMMU kontrolliert, ob der Zugriff erlaubt ist und ihn an die entsprechende Speicherstelle der VM umleitet. Dasselbe gilt, wenn CPU 2 das gemeinsam nutzbare Gerät einen DMA-Schreibvorgang initiieren lassen will. Die verwendete Index-ID wird lesbar durch die VF-Schnittstelle bereitgestellt (beispielsweise um anzuzeigen, welcher Puffer für eine von dem gemeinsam nutzbaren Gerät indizierte DMA-Transaktion verwendet wurde).

Aufgrund der Vereinfachung des Beispiels werden feste Werte für die Basisadresse, Offsets und Größe angenommen. Diese Annahme begrenzt das Konzept nicht auf feste Werte. Eine Idee dafür die Parameter konfigurierbar und unter der Kontrolle des Master zu halten, ist eine programmierbare Menge von Modi pro VF in der PF, die von der VF lesbar sind und für den VF-Treiber interpretierbar oder ihm bekannt sind.

Weitere Erwägungen zur Verwendung von DMA:
Ein weiterer Punkt ist es, Unterbrechungen (Interrupts) in Verbindung mit DMA über NTBs zu diskutieren. Wie anfangs erwähnt werden Unterbrechungen in Systemen, die NTBs verwenden, in derselben PCle-Hierarchie gemäß Voreinstellung isoliert. Es gibt Lösungen mit Türklingelmechanismen, um Unterbrechungen von einer PCle-Hierarchie in eine andere weiterzuleiten (siehe [5]).

Unter vorteilhafter Nutzung der besonderen Architektur von Avioniksystemen, die eine festgelegte, Zeit-gesteuerte und periodische Ablaufsteuerung aufweisen, schlagen wir die Verwendung eines unterbrechungslosen DMA-Konzepts mit NTBs vor. Dies kann dadurch erreicht werden, dass zusätzliche Mengen von Bereitschaftsflags, Zeitstempeln und/oder "gültig bis"-Markierungen pro PF/VF bereitgestellt werden. Gewöhnlich gibt es mehr als zwei Unterbrechungen pro Funktion (eine zum Empfangen, eine zum Senden, und eine oder mehrere zur besonderen Mitteilung von Ausnahmen oder anderen Steuervorgängen). Bei dem vorgeschlagenen Konzept werden die zusätzlichen Flags und Markierungen periodisch in Verbindung mit der vordefinierten festgelegten zeitgesteuerten Ablaufplanung abgefragt. Die daraus resultierenden Vorteile dieses Konzepts , keine Umgehungslösungen mit Türklingelmechanismen zu verwenden, sind zunächst die Optimierung des Ablaufplans durch die Reduzierung der zur Behandlung von Unterbrechungen notwendigen eingeplanten Zeitenreserven (scheduling slack) und zweitens eine optimierte CPU-Leistung durch die Vermeidung von unnötigen Kontextwechseln und das Verschieben der Ein-/Ausgabeabwicklung auf Hardware.

### Betriebssicherer und sicherer Systemstart

Ein betriebssicherer und sicherer Systemstart, der die Aufzählung und das sammeln der notwendigen Informationen zum Aufbau der DMA-Lösung umfasst, ist ein essenziell kritischer Punkt bei dem Betrieb eines solchen Systems. Das System, welches durch Fig. 1 beschrieben ist, wird wieder als Basis für die vorgestellte Lösung verwendet. So wie bei den oben beschriebenen Problemen und Lösungen können dieses Problem und die nachfolgend beschriebenen Lösungen auch auf das System, das in Fig. 2 gezeigt ist, übertragen werden.

Es wird angenommen, dass nur CPU 1 sicher und vertrauenswürdig ist, wohingegen die CPUs 2 bis 4 nicht sicher und vertrauenswürdig sind (beispielsweise aufgrund ihrer Komplexität). Folglich ist das Hauptproblem, zu verhindern, dass die CPUs 2 bis 4 vor CPU 1 einen Konfigurationszugriff auf die NTBs erlangen. In diesem Fall könnte die Konfiguration des NTB entweder durch einen Fehler (Betriebssicherheit) oder absichtlich (Sicherheit) beeinflusst werden und dadurch könnte das gesamte System beeinflusst werden.

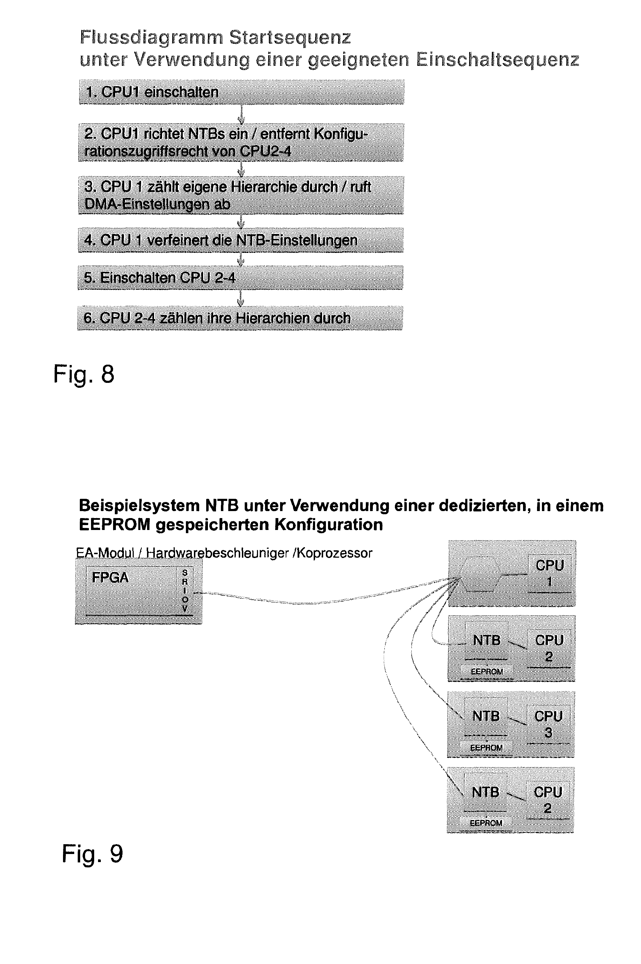

Eine Möglichkeit, den Zugriff auf eine betriebssichere und sichere Art zu steuern ist, eine angemessene Einschaltsequenz einzuhalten, durch die sichergestellt ist, dass CPU 2 bis 4 keinen Zugriff haben, bevor CPU 1 bereit ist (siehe Fig. 8).

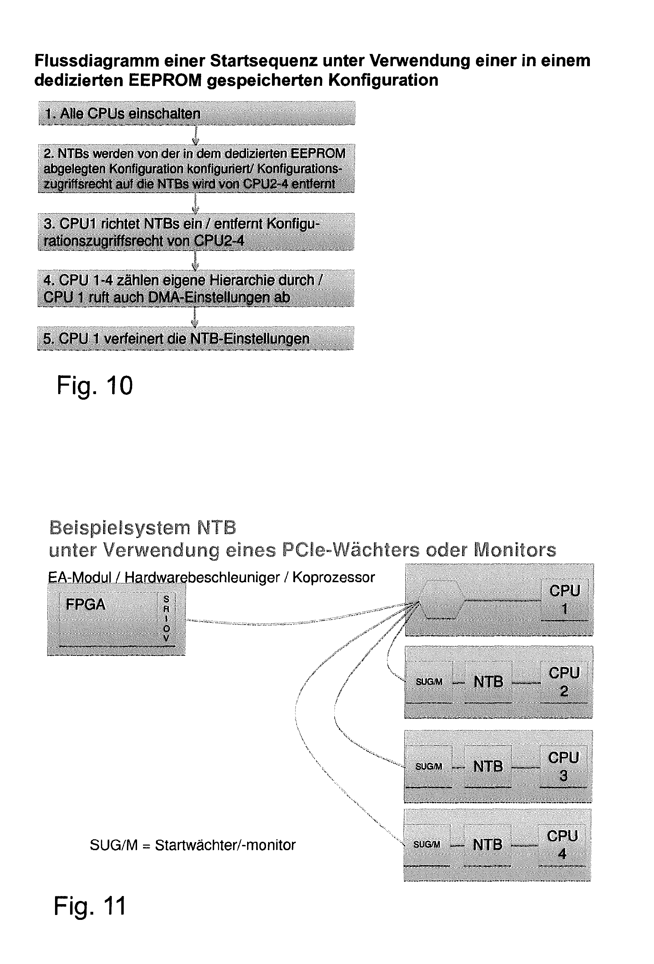

Eine zweite Herangehensweise verwendet einen dedizierten Konfigurationsmechanismus unter Verwendung von vordefinierten Konfigurationsdaten in einer isolierten, nichtflüchtigen Speichereinrichtung (beispielsweise ein EEPROM, siehe Fig. 9). Die Konfiguration durch Verwendung dieses dedizierten Konfigurationsmechanismus' ist um Größenordnungen schneller als der Startvorgang einer CPU. Daher ist es sichergestellt, dass CPU 2 bis 4 keinen Zugriff haben, bevor CPU 1 bereit ist. Fig. 10 zeigt die angewendete Startsequenz.

Die dritte Lösung ist es, einen besonderen PCle-Startüberwacher oder Wächter (Startwächter) zwischen jedem NTB und dem CPU 1-System zu verwenden (siehe Fig. 11). Diese Startwächter sind transparent für alle PCle-Geräte und analysieren die PCle-Transaktionen. Konfigurationsnachrichten und Rücksetzungen werden verworfen, typische Speichertransaktionen weitergeleitet. Diese Steuerungsfunktionalität hindert CPU 2 bis 4 daran, Teile des CPU 1-Systems zu konfigurieren.

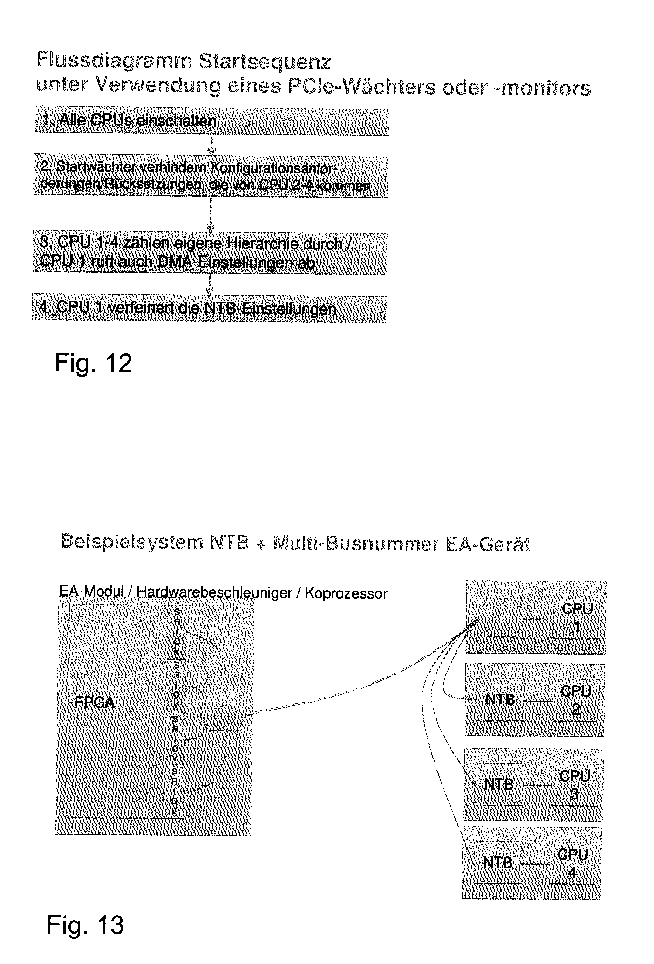

Fig. 11 zeigt nur eine mögliche Implementierung unter Verwendung eines Wächters. In diesem Fall ist der Startwächter zwischen dem NTB und dem Hauptsystem angeordnet. Es ist auch vorstellbar, dass der Startwächter zwischen der untergeordneten CPU (CPU 2 bis 4) und dem NTB residiert. Die Startsequenz ist in Fig. 12 gezeigt.

### Ein-/Ausgabegerät, das mehrere Busnummern aufbraucht

Das oben beschriebene System zeigt eine Lösung zur gemeinsamen Nutzung eines Ein-/Ausgabegerätes (SR-IOV-Gerät) in dem System, das NTBs und IOMMUs verwendet. In diesem Kontext wurde angenommen, dass ein einzelnes SR-IOV-Gerät dazu in der Lage ist, eine ausreichende Anzahl VF für die Systemanforderungen bereitzustellen. PCle unterstützt 8 Funktionen pro Endpunktgerät (genauer eine 3 Bit Busnummer). Mit der ARI-Erweiterung (Alternative Routing ID, verfügbar seit PCle 2.1) wird die Anforderungs-ID (8 Bit Busnummer, 5 Bit System-PCle-Gerätenummer, 3 Bit Funktionsnummer) in dem PCle-Kopf auf eine Art interpretiert, die 256 Funktionen pro Endpunkt unterstützt (8 Bit Busnummer, 8 Bit Funktionsnummer, siehe [13]). Keine derzeit verfügbaren eingebetteten CPU/SoC-Systeme, die PCle verwenden, unterstützen diese ARI-Erweiterung. In solchen Systemen sind höchstens acht Funktionen pro Endpunktgerät verfügbar.

Eine Lösung, um diese Restriktionen zu umgehen ist es, ein Ein-/Ausgabegerät zu entwerfen, das mehrere PCle-Busnummern verrechnen kann. Dies kann dadurch erreicht werden, dass ein Ein-/Ausgabegerät aus mehreren SR-IOV Endpunkten -jeder mit maximal 8 Funktionen - mit einem lokalen PCle-Switch in dem Ein-/Ausgabegerät kombiniert wird (siehe Fig. 13).

Das Beispiel zeigt ein Ein-/Ausgabegerät, das mehrere Busnummern verrechnen kann, mit 4 SR-IOV-Endpunkten mit 8 Funktionen pro Endpunkt, was in der Bereitstellung von 32 Funktionen resultiert. Das Maximum dieses Konzepts (256 x 8 ist gleich 2048) wird gewöhnlich durch die verfügbaren FPGA/ASIC-Ressourcen begrenzt.

### System, in dem mehrere SR-IOV-Endpunkte gemeinsam genutzt werden/sicheres NTB-Adressabbildungskonzept

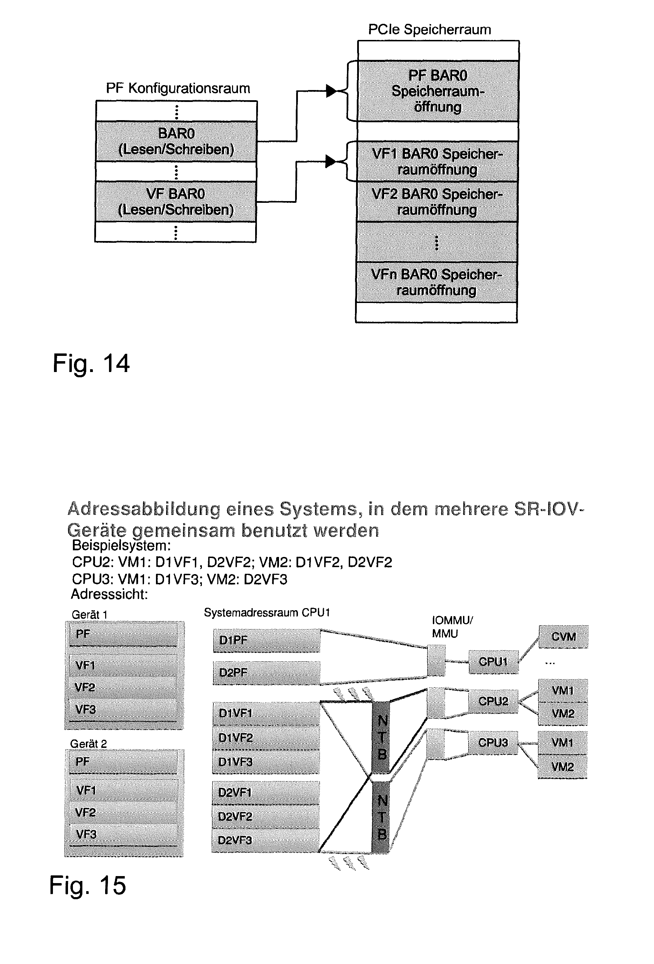

Die gemeinsame Nutzung eines Ein-/Ausgabegerätes, das mehrere Busnummern aufbraucht (mit mehreren SR-IOV-Endpunkten) oder zwei oder mehreren SR-IOV-Geräten (mit je einem SR-IOV-Endpunkt) führt zu einem weiteren Problem. In diesem Fall sind BARs (Base Address Registers) von VFs in SR-IOV-Geräten von der Basis-BAR, die in der PF konfiguriert ist, abhängig. Die Adressabbildung des VF in dem Systemadressraum muss kontinuierlich ausgerichtet sein (siehe Fig. 14).

Wie bereits oben gezeigt, stellen NTBs nur eine einzige Adressöffnung zur Verfügung. Der Speicherraum der VFs ist kontinuierlich und nicht die Menge von VFs von unterschiedlichen Geräten, auf die eine einzelne CPU zugreifen möchte. Folglich benötigt die Adressabbildung eines NTB Zugriff auf den gesamten Adressbereich aller gemeinsam genutzten SR-IOV-Endpunktgeräte, was zu überlappenden Adressräumen führt (siehe Fig. 15).

Als erstes ist diese überlappende Adressabbildung von einem Sicherheitsstandpunkt aus unerwünscht, da alle VFs auf alle CPUs in allen PCle-Hierarchien zugreifen können. Zum zweiten müssen nicht verwendete Bereiche von Adressräumen abgebildet werden und brauchen eine unnötige Menge Adressraum auf. Ein derartiger Entwurf skaliert nicht gut.

Das Verhindern von überlappenden Adressabbildungen kann auf verschiedene Arten gelöst werden.

Zunächst können mehrfache NTBs verwendet werden (ein NTB pro VF, auf die eine CPU zugreifen möchte). Unglücklicherweise verlangt dies sehr viele NTBs und skaliert somit ebenfalls nicht gut.

Virtualisierung eines NTBs einer bestimmten Einzelbaum-PCle-Hierarchie, um mehrere NTBs zu emulieren, ist eine weitere Herangehensweise.

Eine dritte Herangehensweise nimmt an, dass es für eine VF ausreichend ist, nur ein VF BAR zu verwenden und dieses VF BAR auf eine Art und Weise zu verwenden, die eine kontinuierliche Abbildung der Menge von VFs unterschiedlicher Geräte erlaubt, auf die eine einzelne CPU zugreifen will.

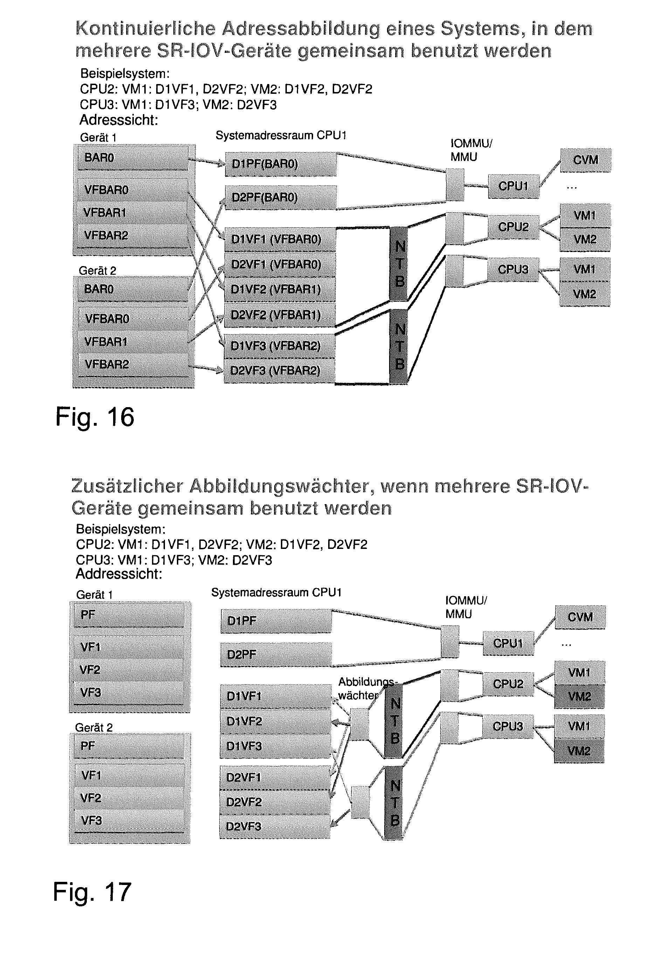

Fig. 16 zeigt eine beispielhafte BAR/VF BAR- Adressabbildung eines Systems mit 3 CPUs.

CPU 1 ist der Systemmaster in diesem Fall und zumindest alle PF sind auf diese CPU abgebildet. VM1 von CPU 2 möchte auf VF 1 von Gerät 1 (D1VF1) und D2VF1 zugreifen. VM 2 von CPU 2 möchte auf VF 2 von Gerät 1 (D1VF2) und D2VF2 zugreifen. Somit sollten in diesem Beispiel D1VF1, D2VF1, D1VF2 und D2VF2 kontinuierlich in den Adressraum abgebildet werden. Dies wird dadurch erreicht, dass in einem SR-IOV-Endpunktgerät exklusiv eine VF BAR pro VF verwendet wird. Beispielsweise benutzt in Gerät 1 VF1 nur VF BAR0. Die Separierung und Verteilung an die korrespondierenden VM von CPU 2 wird wiederum von der MMU bzw. IOMMU durchgeführt. Dadurch, dass 6 BARs pro PCle-Funktion verfügbar sind, stellt dieses Konzept 6 sicher separierte virtuelle Schnittstellen pro SR-IOV-Endpunkt bereit. Wenn mehr als 6 sicher separierte virtuelle Schnittstellen pro Gerät benötigt werden, können mehrere PF, die jeweils 6 virtuelle Funktionen enthalten, verwendet werden.

Eine vierte Herangehensweise verwendet einen zusätzlichen Abbildungswächter. Dieser zusätzliche Abbildungswächter hat eine ähnliche Funktionalität wie eine IOMMU, er separiert den Bereich des Adressraums, den er kontrolliert, in Teile und bildet sie erneut ab. Der Unterschied ist, dass der Abbildungswächter in der Richtung auf die Ein-/Ausgabegeräte zu anstatt auf die CPU zu arbeitet (siehe Fig. 17).

Diese vierte Herangehensweise hat keine Limitierung hinsichtlich der maximal anwendbaren Anzahl von VF pro Ein-/Ausgabegerät.

Zusätzliche Betriebssicherheit und Sicherheitserweiterung für ein System, das SR-IOV-Geräte unter einer Vielzahl von PCle-Hierarchien gemeinsam benutzt

Diskussion von möglichen Bedrohungen, denen ein System, das SR-IOV-Geräte unter einer Vielzahl von PCle-Hierarchien gemeinsam nutzt, gegenübersteht:

Zur Vereinfachung konzentrieren sich die Überlegungen auf ein System, bei dem ein einzelnes SR-IOV-Endpunktgerät gemeinsam genutzt wird, wie beispielsweise in Fig. 3, Fig. 7 oder Fig. 16. Davon abweichende Ergebnisse für ein System, bei dem mehrere SR-IOV-Endpunktgeräte gemeinsam genutzt werden, werden explizit erwähnt (siehe Tabellen).

Fehler von Systemen, die einen zusätzlichen Abbildungswächter (z.B. Fig.17: Beispielsystem von 3 CPUs, die zwei SR-IOV-Endpunkte gemeinsam verwenden) mit Richtung auf die Ein-/Ausgabegeräte haben, haben denselben Effekt wie NTB-Fehler in PIO-Richtung.

Solche Systeme, wie sie in Fig. 3, Fig. 7 oder Fig. 16 gezeigt sind, bringen den Vorteil mit sich, dass sie den folgenden kritischen Betriebssicherheit- oder Sicherheitsfehlern widerstehen.

Zunächst ist der Effekt dieser Fehler auf die eigene Hierarchie beschränkt, wenn in solchen Systemen eine verbundene CPU (beispielsweise CPU 2) ihre Hierarchie in Rücksetzungsblockierung hält oder ihre Hierarchie mit Konfigurationsanforderungen flutet. Der Grund dafür ist, dass keine Konfigurationsanforderung oder Rücksetzung (über) eine NTB passieren kann, egal ob sie durch einen Fehler der Sicherheit (absichtlich durch eine bösartige Person, die eine VM übernimmt) oder durch einen Fehler der Betriebssicherheit (gewöhnlicher Betriebsfehler) verursacht wurde.

Darüber hinaus werden non-posted Speicher-Schreibanforderungen (Transaktionen ohne Bestätigung) als besonders fehleranfällig angesehen. Daher ist diese Art von Transaktion Gegenstand der folgenden Fehleranalyse.

Wir klassifizieren die Fehler in drei Gruppen. Es ist irrelevant, ob der Fehler durch einen Fehler der Sicherheit (absichtlich durch eine bösartige Person, die eine VM übernimmt) oder durch einen Fehler der Betriebssicherheit (gewöhnlicher Betriebsfehler) verursacht wurde. Die erste Gruppe sind verzögerte Pakete (DP-Fehler), die zweite sind Pakete mit falschen Adressen (WA-Fehler) und die letzte sind Pakete mit Maskierungs Fehler (MA-Fehler). MA-Fehler werden als Paket mit einer falschen Quellen-ID zusammen mit einer falschen Ziel-ID (Adresse) charakterisiert. Darüber hinaus werden die Fälle unterschieden, dass eine der CPU, eine NTB, ein Ein-/Ausgabegerät oder der Switch fehlerhaft sind. Des Weiteren unterscheiden wir zwischen PIO-Transaktionen (Richtung von der CPU auf das Ein-/Ausgabegerät) und DMA-Transaktionen (Richtung von dem Ein-/Ausgabegerät zu der CPU).

Ein Beispiel für die DP-Gruppe ist eine Nachricht, welche das Einziehen des Fahrwerks eines Flugzeugs steuert. Wenn diese Nachricht verzögert wird, im schlimmsten Fall, bis das Flugzeug sich zur Landung nähert, sind die Folgen desaströs.

WA-Fehler können in einige Untergruppen unterteilt werden:

| Typ | Fehler (Grund) | Fehler | Folgefehler (Wirkung) |
|---|---|---|---|
| WA 01 | CPU verursacht falsche Adresse | PIO, falsche Adresse außerhalb des ursprünglichen NTB-Fensters | Könnte sich auf die eigene PCle-Hierarchie auswirken |
| WA 02 | CPU verursacht falsche Adresse | PIO, falsche Adresse innerhalb des ursprünglichen NTB-Fensters | Wirkt sich nur auf die eigene Geräteschnittstelle aus |
| WA 03 | CPU verursacht falsche Adresse | DMA, falsche DMA-Puffer-ID | Hat nur Auswirkungen auf eigene Applikationen in der PCle-Hierarchie |
| WA 04 | NTB verursacht falsche Adressübersetzung | PIO, falsche Adresse außerhalb des ursprünglichen Übersetzungsfensters | Kritisch! Könnte sich auf das Hauptsystem auswirken |
| WA 05 | NTB verursacht falsche Adressübersetzung | PIO, falsche Adresse innerhalb des ursprünglichen Übersetzungsfensters | Wirkt sich nur auf die eigene Geräteschnittstelle aus |
| WA 06 | NTB verursacht falsche Adressübersetzung | DMA, falsche Adresse außerhalb des ursprünglichen Übersetzungsfensters | Wirkt sich nur auf das Ziel-CPU-System ohne die CPU selbst aus (CPU ist durch IOMMU geschützt) |
| WA 07 | NTB verursacht falsche Adressübersetzung | DMA, falsche Adresse innerhalb des ursprünglichen Übersetzungsfensters | Wirkt sich nur auf die Ziel-VM aus |
| WA 08 | PCle-Switch verursacht falsche Adresse | TLP nicht verändert, PIO zum falschen Ziel weitergeleitet | Keine Auswirkung (EP verweigert Zugriff unter Verwendung der Basis-/Begrenzungsregister) |
| WA 09 | PCle-Switch verursacht falsche Adresse | TLP nicht verändert, DMA zum falschen Ziel weitergeleitet (System-CPU) | Keine Auswirkung (PCIe RC verweigert Zugriff unter Verwendung der Basis-/Begrenzungsregister) |
| WA 10 | PCle-Switch verursacht falsche Adresse | TLP nicht verändert, DMA zum falschen Ziel weitergeleitet (CPU hinter NTB) | Keine Auswirkung (NTB verweigert Zugriff unter Verwendung der Basis-/Begrenzungsregister) |
| WA 11 | PCle-Switch verursacht falsche Adresse | TLP verändert, PIO, falsche Adresse außerhalb der Zielgrenzen (Basis-/Begrenzungsregister) | Keine Auswirkung (Paket zurückgewiesen) |
| WA 12 | PCle-Switch verursacht falsche Adresse | TLP verändert, PIO, falsche Adresse innerhalb der Zielgrenzen (Basis-/Begrenzungsregister) | Keine Auswirkung (ECRC erkennt Fehler) |
| WA 13 | PCle-Switch be verursacht falsche Adresse | TLP verändert, DMA, falsche Adresse außerhalb der Zielgrenzen (Basis-/Begrenzungsregister) | Keine Auswirkung (Haupt-CPU: IOMMU weist zurück; untergeordnete CPU: NTB weist zurück) |
| WA 14 | PCle-Switch verursacht falsche Adresse | TLP verändert, DMA, falsche Adresse innerhalb der Zielgrenzen (Basis-/Begrenzungsregister) | Keine Auswirkung (Haupt-CPU: PCle RC weist zurück (ECRC-Fehler); untergeordnete CPU: NTB weist zurück (ECRC-Fehler)) |
| WA 15 | Ein-/Ausgabegerät verursacht falsche Adresse | DMA, falsche Adresse außerhalb des ursprünglichen Zielfensters | Ein Ein-/Ausgabegerät: keine Auswirkung (falsche Subhierarchie wird von NTB blockiert; Master-CPU/falsche VM: blockiert durch IOMMU) Zwei Ein-/Ausgabegeräte: kann sich auf das zweite Ein-/Ausgabegerät auswirken |
| WA 16 | Ein-/Ausgabegerät verursacht falsche Adresse | DMA, falsche Adresse innerhalb des ursprünglichen Zielfensters | Kann sich nur auf die Ziel-VM, die auf der Ziel-CPU läuft, auswirken |

Da NTBs bei der Adressübersetzung die Quell- und Zieladdresse im TLP-Header (transaction level packet) ändern müssen, muss die end-to-end-CRC (ECRC) Integritätsprüfsumme über den Header und die Nutzdaten neu berechnet werden. Im schlimmsten Fall, wenn die NTB defekt ist, generiert die NTB eine neue ECRC von den bereits fehlerhaften Daten. Somit können PCle-Bus-Hierarchien über NTBs auf diese Art nicht durch den PCle-ECRC - Mechanismus geschützt werden.

Betreffend WA 03 ist anzumerken, dass Systeme, die vordefinierte DMA-Puffer mit ID-Adressierung verwenden, robuster gegen fehlerhafte DMA-Transaktionen sind. DMA-Transaktionen werden geprüft, bevor sie erlaubt werden und, falls nötig, blockiert. Unabhängig davon, ob die ID eines Deskriptors einer DMA-Transaktion absichtlich verändert wurde (durch Sicherheit verursacht) oder von einem Übermittlungsfehler verursacht wurde, sind die Auswirkungen auf die eigene PCle-Hierarchie beschränkt, weil die ID des an eine spezifische Hierarchie gebunden sind. Selbst wenn die DMA-Vorrichtung eines Ein-/Ausgabegeräts einige Bits der tatsächlichen Adresse aufgrund eines gewöhnlichen Betriebsfehlers deformiert, blockieren die NTBs zusammen mit den IOMMUs den Transfer.

Beispielsweise VF3, die der CPU 2 in dem in Fig. 3 abgebildeten System zugeordnet ist, versucht aufgrund eines gewöhnlichen Betriebsfehlers innerhalb des Ein-/Ausgabegeräts auf abgebildeten Speicher von CPU 1 oder CPU 3 zuzugreifen und wird von der IOMMU oder dem NTB blockiert.

### Zusammenfassung:

System kritisch sind WA 04 und WA 15 in dem Fall, in dem das Hauptsystem über mehr als ein Ein-/Ausgabegerät verfügt. Der schlimmste Fall in den anderen Fällen ist, dass nur die eigene PCle-Hierarchie beeinflusst wird. Daher ist der Fehler auf eine einzelne Hierarchie beschränkt. Fehler, die von dem PCle switch verursacht werden, scheinen keine Auswirkungen zu haben, solange Ende-zu-Ende-CRC-Integritätsmechanismen (ECRC) verwendet werden.

Wie die WA-Fehler können auch die MA-Fehler in einige Untergruppen aufgeteilt werden:

| Typ | Fehler (Grund) | Fehler | Folgefehler (Wirkung) |
|---|---|---|---|
| MA 01 | CPU verursacht falsche Adresse/Quellen-ID | PIO, falsche Adresse/Quellen-ID außerhalb des ursprünglichen NTB-Fensters | Kann Auswirkungen auf die eigene PCle-Hierarchie haben |
| MA 02 | CPU verursacht falsche Adresse/Quellen-ID | PIO, falsche Adresse/Quellen-ID innerhalb des ursprünglichen NTB-Fensters | Hat nur Auswirkungen auf die eigene Geräteschnittstelle |
| MA 03 | CPU verursacht falsche Adresse/Quellen-ID | DMA, falsche DMA-Puffer-ID/Quellen-ID | Verhält sich wie PIO (MA Typ 01/02) in diesem Fall; siehe oben |
| MA 04 | NTB verursacht falsche Adressübersetzung/Quellen-ID | PIO, falsche Adresse außerhalb des ursprünglichen Übersetzungsfensters | Kritisch! Könnte sich auf das Hauptsystem auswirken |
| MA 05 | NTB verursacht falsche Adressübersetzung/Quellen-ID | PIO, falsche Adresse/Quellen-ID innerhalb des ursprünglichen Übersetzungsfensters | Wirkt sich nur auf die eigene Geräteschnittstelle aus |
| MA 06 | NTB verursacht falsche Adressübersetzung/Quellen-ID | DMA, falsche Adresse/Quellen-ID außerhalb des ursprünglichen Übersetzungsfensters | Wirkt sich nur auf das Ziel-CPU-System aus |
| MA 07 | NTB verur-sacht falsche Adressübersetzung/Quellen-ID | DMA, falsche Adres-se/Quellen-ID innerhalb des ursprünglichen Übersetzungsfensters | Wirkt sich nur auf die ZielVMs aus |
| MA 08 | PCIe-Switch verursacht falsche Adresse/Quellen-ID | TLP nicht verändert, PIO zum falschen Ziel weitergeleitet und Quellen-ID verändert | Keine Wirkung (EP verweigert Zugriff unter Verwendung der Basis-/Begrenzungsregister) |
| MA 09 | PCle-Switch verursacht falsche Adresse/Quellen-ID | TLP nicht verändert, DMA zum falschen Ziel weitergeleitet (System-CPU) und Quellen-ID verändert | Keine Auswirkung (PCle RC verweigert Zugriff unter Verwendung der Basis-/Begrenzungsregister) |
| MA 10 | PCle-Switch verursacht falsche Adresse/Quellen-ID | TLP nicht verändert, DMA zum falschen Ziel weitergeleitet (CPU hinter NTB) und Quellen-ID verändert | Keine Auswirkung (NTB verweigert Zugriff unter Verwendung der Basis-/Begrenzungsregister) |
| MA 11 | PCle-Switch verursacht falsche Adresse/Quellen-ID | TLP verändert, PIO, falsche Adresse außerhalb der Zielgrenzen (Basis-/Begrenzungsregister) und Quellen-ID verändert | Keine Auswirkung (Paket zurückgewiesen) |
| MA 12 | PCle-Switch verursacht falsche Adresse/Quellen-ID | TLP verändert, PIO, falsche Adresse innerhalb der Zielgrenzen (Basis-/Begrenzungsregister) und Quellen-ID verändert | Keine Auswirkung (ECRC erkennt Fehler) |
| MA 13 | PCle-Switch verursacht falsche Adresse/Quellen-ID | TLP verändert, DMA, falsche Adresse außerhalb der Zielgrenzen (Basis-/Begrenzungsregister) und Quellen-ID verändert | Keine Auswirkung (Haupt-CPU: PCle RC weist zurück (ECRC-Fehler) untergeordnete CPU: NTB weist zurück (ECRC-Fehler)) |
| MA 14 | PCle-Switch verursacht fal-sche Adresse/Quellen-ID | TLP verändert, DMA, falsche Adresse inner-halb der Zielgrenzen (Basis-/Begrenzungsregister) und Quellen-ID verändert | Keine Auswirkung (Haupt-CPU: PCle RC weist zurück (ECRC-Fehler) untergeordnete CPU: NTB weist zurück (ECRC-Fehler)) |
| MA 15 | Ein-/Ausgabegerät verursacht falsche Adresse/Quellen-ID | DMA, falsche Adresse/Quellen-ID außerhalb des ursprünglichen Zielfensters | Ein Ein-/Ausgabegerät: Kritisch; schlimmster Fall: könnte einen anderen NTB treffen und sich auf die andere Hierarchie auswirken Zwei Ein-/Ausgabegeräte: wie oben und kann sich auf das zweite Ein-/Ausgabegerät auswirken |
| MA 16 | Ein-/Ausgabegerät verursacht falsche Adresse/Quellen-ID | DMA, falsche Adresse/Quellen-ID innerhalb des ursprünglichen Zielfensters | Kann sich nur auf die eigene PCIe-Hierarchie auswirken |

Systemkritisch sind WA 04 und WA 15. Der schlimmste Fall in den anderen Fällen ist, dass nur die eigene PCle-Hierarchie betroffen ist. Folglich ist der Fehler auf eine einzelne Hierarchie begrenzt. Fehler, die von dem PCle-Switch verursacht werden, scheinen keinen Effekt zu haben, solange Ende-zu-Ende-CRC-Integritätsmechanismen (ECRC) verwendet werden

### Lösung/Erweiterung:

Ein DP kann durch eine Protokollerweiterung verhindert werden. Das Hinzufügen eines Zeitstempels, einer Ablaufzeit, die auf Softwareebene evaluiert werden müssen, löst dieses Problem.

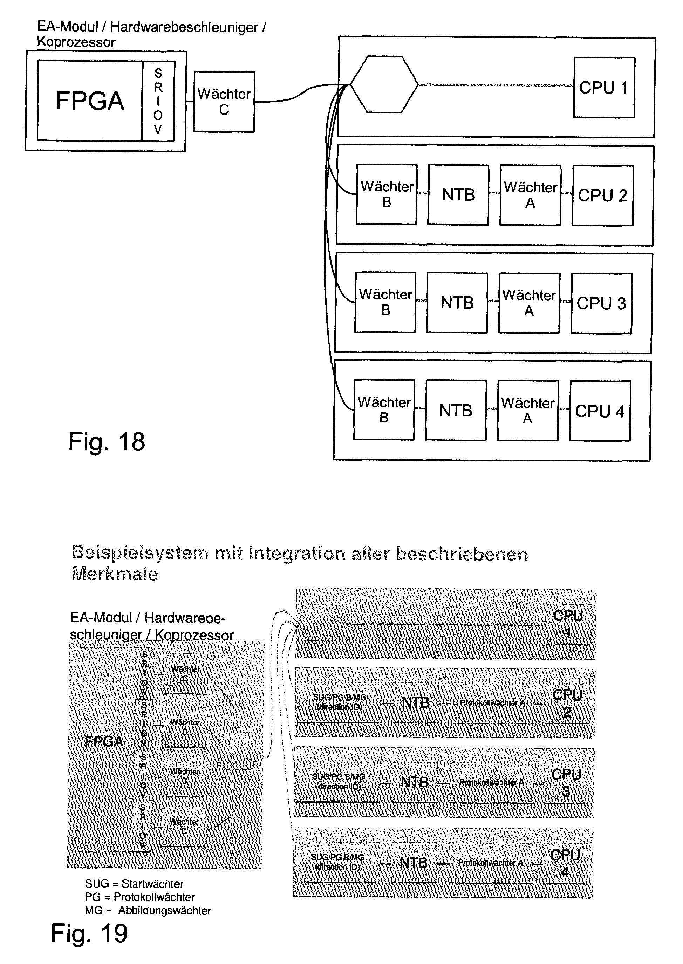

Um das System robust dagegen Betriebssicherheit- und Sicherheitsverletzungen durch WA- und MA-Fehler zu machen, können zusätzliche PCle-(Protokoll-) Wächter in das System eingefügt werden (Fig. 18).

Diese Protokollwächter werden hinter den NTB (Wächter A, Wächter B) oder hinter dem Ein-/Ausgabegerät oder den Ein-/Ausgabegeräten (Wächter C) eingefügt. An dieser Position analysieren die Wächter den Verkehr, der von den NTB ist oder Ein-/Ausgabegeräten kommt und blockieren unerlaubte PCle-Pakete oder invalidieren sie. Dies erhöht die Robustheit des Systems:

| Typ | Fehler/Wirkung, bevor der Wächter eingefügt wird | Fehler/Wirkung unter Verwendung des Wächters |
|---|---|---|
| WA 01 | Könnte Auswirkungen auf die eigene PCle-Hierarchie haben | Keine Auswirkung; von Wächter A erkannt |
| WA 02 | Wirkt sich nur auf die eigene Geräteschnittstelle aus | Hat nur Auswirkungen auf die eigene Geräteschnittstelle; nicht detektierbar |
| WA 03 | Wirkt sich nur auf eigene Applikationen in der PCle-Hierarchie aus | Wirkt sich nur auf eigene Applikationen in der PCle-Hierarchie aus; nicht detektierbar |
| WA 04 | Kritisch! Könnte sich auf das Hauptsystem auswirken | Keine Auswirkung; von Wächter B erkannt |
| WA 05 | Wirkt sich nur auf die eigene Geräteschnittstelle aus | Wirkt sich nur auf die eigene Geräteschnittstelle aus; nicht detektierbar |
| WA 06 | Wirkt sich nur auf das Ziel-CPU-System ohne die CPU selbst aus (CPU wird von der IOMMU geschützt) | Keine Auswirkung; von Wächter A erkannt |
| WA 07 | Wirkt sich nur auf die Ziel-VM aus | Wirkt sich nur auf die Ziel-VM aus; nicht detektierbar |
| WA 08-WA 14 | Keine Auswirkung | Keine Auswirkung |
| WA 15 | Ein Ein-/Ausgabegerät: keine Auswirkung (falsche Subhierarchie wird von NTB blockiert; Master-CPU/falsche VM: blockiert durch IOMMU) Zwei Ein-/Ausgabegeräte: kann sich auf das zweite Ein-/Ausgabegerät auswirken | Ein Ein-/Ausgabegerät: keine Auswirkung (falsche Subhierarchie wird von NTB blockiert; Master-CPU/falsche VM: blockiert durch IOMMU) Zwei Ein-/Ausgabegeräte: keine Auswirkung; von Wächter C erkannt |
| WA 16 | Kann sich nur auf die Ziel-VM, die auf der Ziel-CPU läuft, auswirken | Kann sich nur auf die Ziel-VM, die auf der Ziel-CPU läuft, auswirken; nicht detektierbar |
| MA 01 | Kann Auswirkungen auf die eigene PCle-Hierarchie haben | Keine Auswirkung; von Wächter A erkennbar |
| MA 02 | Hat nur Auswirkungen auf die eigene Geräteschnittstelle | Keine Auswirkung; von Wächter A erkennbar |
| MA 03 | Verhält sich wie PIO (MA Typ 01/02) | Keine Auswirkung; von Wächter A erkennbar |
| MA 04 | Kritisch! Könnte sich auf das Hauptsystem auswirken | Keine Auswirkung; von Wächter B erkennbar |
| MA 05 | Wirkt sich nur auf die eigene Geräteschnittstelle aus | Keine Auswirkung; von Wächter B erkennbar |
| MA 06 | Wirkt sich nur auf das Ziel-CPU-System aus | Keine Auswirkung; von Wächter A erkennbar |
| MA 07 | Wirkt sich nur auf die Ziel-VMs aus | Keine Auswirkung; von Wächter A erkennbar |
| MA 08-MA 14 | Keine Auswirkung | Keine Auswirkung |
| MA 15 | Ein Ein-/Ausgabegerät: Kritisch; schlimmster Fall: könnte einen anderen NTB treffen und sich auf die andere Hierarchie auswirken Zwei Ein-/Ausgabegeräte: wie oben und kann sich auf das zweite Ein-/Ausgabegerät auswirken | Ein Gerät: Kritisch; die meisten Fälle können durch den Wächter C begrenzt werden; aber der schlimmste Fall ist nicht erkennbar Zwei Geräte: keine Auswirkung; erkennbar von Wächter C |
| MA 16 | Kann sich nur auf die eigene PCle-Hierarchie auswirken | Keine Auswirkung; erkennbar von Wächter C |

Fehler außer WA 02, WA 03, WA 05, WA 07 und MA 15 können durch die Verwendung von PCle-Protokollwächtern detektiert werden. Die Fehler WA 02, WA 03, WA 05 und WA 07 haben nur Auswirkungen geringen Umfangs (begrenzt auf eine bestimmte VM/CPU/Geräteschnittstelle oder PCle-Hierarchie).

MA 15 bleibt kritisch. Der Wächter C kann alle Kombinationen von gefälschter Schnittstellen-ID und falschen Adressen verhindern, die keinen Zugriff auf die falsch adressierten NTB auf die untergeordnete PCle-Hierarchie haben. Aber der schlimmste Fall, dass eine beliebige Schnittstelle (beispielsweise VF5) die ID einer erlaubten Schnittstelle fälscht und versucht, auf eine Zieladresse innerhalb der geöffneten NTB-Öffnung (beispielsweise von VF3) zuzugreifen, kann nicht detektiert werden. Allerdings ist die Wahrscheinlichkeit für dieses Szenario, den schlimmsten Fall, sehr niedrig, weil die Schnittstellen-ID und die DMA-Adresse nicht unter der Kontrolle einer Software-Applikationen einer CPU liegen und in der Hardware versteckt sind. Daher müssen die PCle-Schnittstellenlogik des Ein-/Ausgabegeräts und die DMA-Einrichtung zur selben Zeit einen Fehler aufweisen und eine gültige Kombination von Quellen-ID und Zieladresse fälschen, was höchst unwahrscheinlich ist. Nichtsdestotrotz kann, um das Restrisiko weiter zu verringern, ein zusätzlicher, fest verdrahteter Fingerabdruckgenerator pro einzelner PCle-Funktion in Hardware eingesetzt werden. Dieser Fingerabdruck wird zu der Nutzlast jedes PCle-Pakets hinzugefügt. Der Wächter C prüft, ob jeder DMA-Zugriff einer Funktion des Ein-/Ausgabegeräts den korrekten Fingerabdruck aufweist. Dieses Verfahren erhöht die Robustheit aber reduziert die Protokolleffizienz.

Wenn der Systemmaster aufgrund seiner Komplexität oder aus anderen Gründen nicht als vertrauenswürdig angesehen werden kann, oder falls CPU 1 eine eigene Fehlerbegrenzungszone bilden soll, können die beschriebenen Verbesserungen auch mit einem dedizierten Systemmaster wie in Fig. 2 gezeigt, angewendet werden in diesem Fall bildet die CPU 1 ihre eigene Fehlerbegrenzungszone. In Fig. 19 ist ein System gezeigt, welches die oben beschriebenen Merkmale aufweist.

In den vorangehenden Abschnitten wurden DP Fehler, WA Fehler und MA Fehler bei non-posted Speicherschreibanforderungen behandelt. Im Folgenden wird das Problem diskutiert, dass PCle Transaktionen über eine NTB nicht durch den PCIE ECRC Mechanismus geschützt werden. Die Übersetzungsfunktionalität in den NTBs verursacht die Neugenerierung der ECRC Prüfsumme. Im schlimmsten Fall, wenn die NTB defekt ist, generiert die NTB eine neue ECRC zu bereits fehlerhaften Nutzdaten. Aufgrund der Neugenerierung der ECRC können PCle Transaktoinen über eine NTB auf diese Art nicht durch den PCle-ECRC-Mechanismus geschützt werden.

### Lösung:

Ein erster Lösungsatzsatz verwendet ein Verfahren, bei dem die CRC Prüfsumme neuberechnet wird, wobei die die Integrität der CRC Prüfsumme beibehalten wird [14]. Dies steht im Gegensatz zur Neuberechnung auf der Grundlage bereits fehlerhafter Daten. Dabei ist die zentrale Idee, die Linearität der CRC Operationen zur Neuberechnung der resultierenden CRC durch Überlagerung der originalen CRC und der der Änderung entsprechenden CRC auszunutzen.

Wenn bereits ein Fehler in den Nutzdaten aufgetreten ist, passt die resultierende CRC nun nicht mehr. Ein Fehler bleibt somit detektierbar [14].

Wenn kommerziell erwerbliche NTBs verwenden werden sollen, die einen solchen Algorithmus nicht aufweisen oder wenn die Hardware nicht als zuverlässig genug betrachtet werden kann, müssten weitere Maßnahmen ergriffen werden.

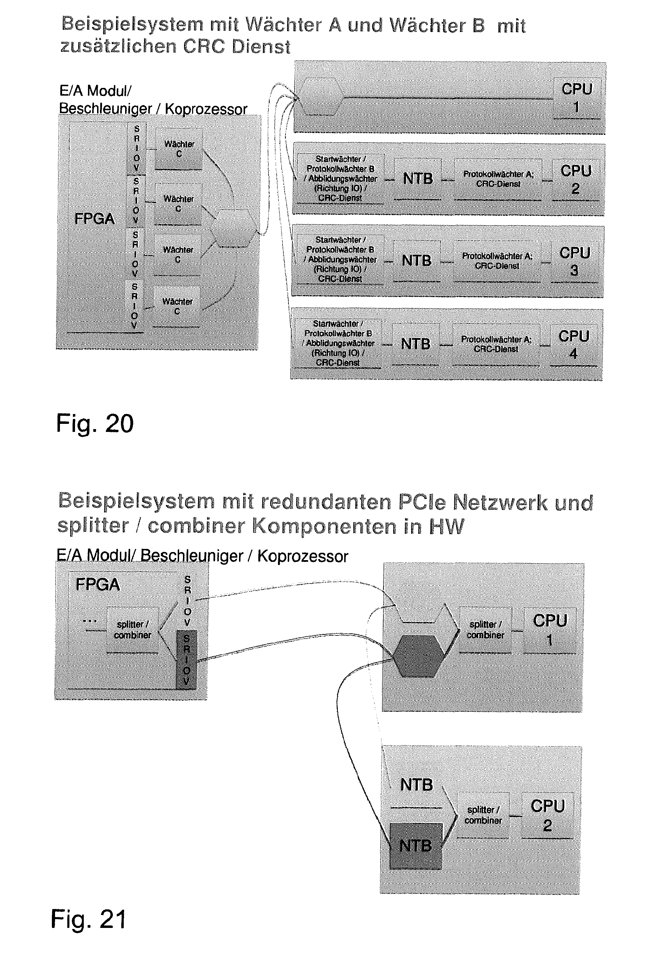

Ein Lösungsansatz, das Problem der ECRC über NTBs zu umgehen, ist eine zusätzliche CRC Prüfsumme im Nutzdatenbereich des TLP nur für die Daten (ohne den TLP Header) zu verwenden. Die Verarbeitung dieser zusätzlichen CRC kann als Dienst so innerhalb der Wächter A und Wächter B implementiert werden, dass die Verarbeitung für die CPUs und das E/A Gerät transparent erfolgt (vgl. Fig. 20). Um die Funktionsweise zu erklären, betrachten wir ein Paket, das von der CPU2 kommend zum E/A Gerät übertragen wird. Zu Beginn sendet die CPU das Paket ab. Nachdem Wächter A seine Wächterfunktionalität abgearbeitet hat, fügt er die zusätzliche CRC Prüfsumme zu den Nutzdaten hinzu. Nachdem das Paket die NTB überquert hat, überprüft Wächter B die CRC. Wenn die Überprüfung erfolgreich war, wird das Paket weiterverarbeitet (Wächterfunktionalität, Weiterleiten des Paktes). Falls das Überprüfungsergebnis negativ ist, wird das Paket verworfen. Ein entsprechender Verarbeitungsprozess wird für die Datenflussrichtung vom E/A Gerät zur CPU durchgeführt. Außerdem ist es vorstellbar, dass die Funktionalität des Wächters B (für die zusätzliche CRC) bereits innerhalb der Logik des E/A Geräts abgehandelt wird.

Die Verwendung eines redundanten PCle Netzwerks mit zusätzlichen Zusammenfüg-/ Verteilkomponenten (combiner and splitter Komponenten) ist ein weiterer Lösungsansatz. Jede einzelne CPU oder jeder einzelner PCle Endpunkt beinhaltet eine solche Zusammenfüg-/ Verteilkomponente oder ist mit einer solchen verbunden. Ausgehende Pakete werden dupliziert und eingehende Pakete werden gesammelt und verglichen. Wenn der Vergleich erfolgreich ist, wird ein Paket in die eingehende Richtung weitergeleitet. Wenn das Vergleichsergebnis negativ ausfällt, wird das Paket verworfen. Gegenstand des Vergleichs können die Nutzdaten selbst, eine zusätzlich eingeführte Prüfsumme (z.B. Adler32, CRC32), oder zusätzlich eingeführte Hashwerte sein (z.B. MD5, SHA, RIPEMD160). Alternativ kann die Zusammenfüg- / Verteilkomponente auch die Prüfsumme mit deiner lokal berechneten Prüfsumme vergleichen und basierend auf dem Vergleich der berechneten und übertragenen Prüfsumme das Paket weiterleiten. Fig. 21 zeigt eine Ausführungsform des Systems, in der die Zusammenfüg-/ Verteilkomponenten in dedzierter Hardware implementiert (z.B. in einem FPGA)

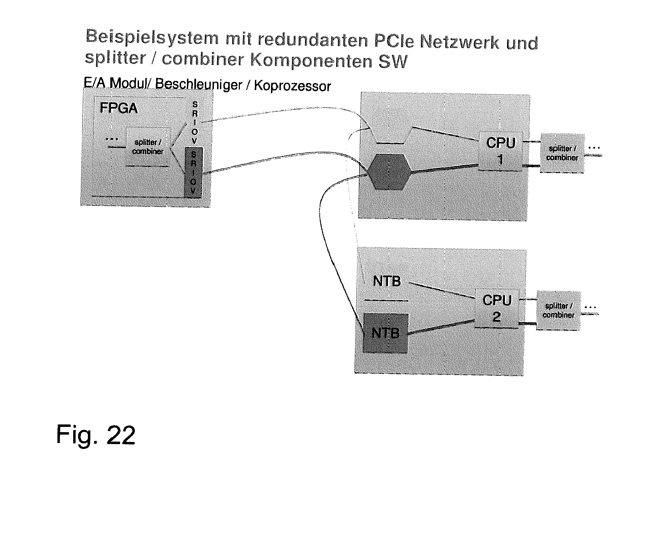

Fig. 22. zeigt eine Ausführungsform des Systems, welche die Zusammenfüg-/ Verteilkomponenten in CPU-Nähe in Software implementiert. Welche dieser Prüfsummen bzw. Hashwerte praktisch verwendet werden, hängt davon ab, welcher Aufwand betrieben werden kann und welche Möglichkeiten die Hardwareplattform zur Verfügung stellt. Beispielsweise, steht auf Intel Plattformen seit dem SSE 4.2 Befehlssatz ein Befehl zur hardware-beschleunigten Berechnung von CRCs zur Verfügung (CRC32). Freescale bietet hardware-beschleunigte SHA Hashwerte durch das SEC 4.0 Modul für die QorIQ Platform an (z.B. P4080).

### Referenzen:

[1] J. Kroll, "Das Who ' s Who der Virtualisierungstechniken," 2012. [Online]. Available:http://www.elektroniknet.de/embedded/technik-know-how/betriebssysteme/article/26197/0/Das_Whos_Who_der_Virtualisierungstechniken/.
[2] PCI-SIG, "Single Root I/O Virtualization and Sharing Specification Revision 1.1," 2010.
[3] PCI-SIG, "Multi-Root I / O Virtualization and Sharing Specification 1.0," 2008.
[4] J. Regula, "Using PCle in a variety of multiprocessor system configurations," 2007. [Online]. Available: http://www.eetimes.com/design/embedded/4006788/Using-PCle-in-a-variety-of-multiprocessor-system-configurations.
[5] J. Regula, "Using Non-transparent Bridging in PCI Express Systems," 2004. [Online]. Available: http://www.plxtech.com/files/pdf/technical/expresslane/NontransparentBridging.pdf.
[6] A. Aswadhati, "Scaling Data Center Interconnects with PCI Express," 2011. [Online]. Available: http://www.pcisig.com/developers/main/training_materials/get_document?doc_id=415a 477bf2725a554d7903f9d8d499daa3e8e4bb.
[7] D. R. Cassiday, A. W. Wilson, J. Acton, C. Binford, and R. J. Lanza, "Cross-coupled peripheral component interconnect express switch," 2010. [Online]. Available: http://www.google.com/patents/US7676625.
[8] B. D. Johnson and O. Torudbakken, "Routing direct memory access requests using doorbell addresses," 2009. [Online]. Available:http://www.freepatentsonline.com/7574536.htm.
[9] J. Higuchi, Y. Hidaka, J. Suzuki, and T. Yoshikawa, "I/O system downstream PCI express bridge, interace sharing method, and program," 2012. [Online]. Available:* http://www.freepatentsonline.com/y2012/0110233.html.
[10] K. Tanaka and M. Takada, "Storage apparatus and virtual port migration method for storage apparatus," 2012. [Online]. Available: http://www.freepatentsonline.com/y2012/0096192.html.
[11] CC, "Common Criteria for Information Technology Security Evaluation Part 30: Security assurance components July 2009 Revision 3 Final Foreword," 2009. [Online]. Available: http://www.commoncriteriaportal.org/files/ccfiles/CCPART3V3.1 R3.pdf.
[12] Intel.com, "Intel ® Virtualization Technology for Directed I / O (VT-d spec)," 2011. [Online]. Available: http://download.intel.com/technology/computing/vptech/Intel(r)_VT_for_Direct_IO.pdf.
[13] PCI-SIG, "PCle Base Specification 3.0," 2010.
[14] D. R. Irvin, "Preserving the integrity of cyclic- redundancy checks when protected text is intentionally altered," 1989. [Online]. Available: http://www.research.ibm.com/journal/rd/336/ibmrd3306D.pdf.

### Liste der verwendeten Abkürzungen

- BAR: Base Address Register
- CPU: Central Processing Unit
- CRC: Cyclic Redundancy Check
- DCT: Discrete Cosine Transformation
- DMA: Direct Memory Access
- ECRC: End-to-End Cyclic Redundancy Check
- EEPROM: Electrically Erasable Programmable Read Only Memory
- FFT: Fast Fourier Transformation
- FPGA: Field Programmable Gate Array
- IOMMU: Input/Output Memory Management Unit
- IPC: Inter-Process Communication
- MMU: Memory Management Unit
- MR-IOV: Multi-Root Input Output Virtualization
- NTB: Non-transparent bridge
- PCI: Peripheral Component Interconnect
- PCle: Peripheral Component Interconnect express
- PF: Physical Function
- PIO: Programmed IO
- RDMA: Remote Direct Memory Access
- SK: Separation Kernel
- SIG: Special Interest Group
- SR-IOV: Single-Root Input Output Virtualization
- TLP: Transaction Layer Packet
- TPM: Trusted Platform Module
- VF: Virtual Function
- VM: Virtual Machine
- VMM: Virtual Machine Monitor

## Patentansprüche

1. Rechnersystem mit wenigstens zwei CPUs, die jeweils eine PCle-Bus-Hierarchie aufweisen, mittels derer Nachrichten, die jeweils eine Herkunftsadresse, eine Zieladresse und eine Nutzlast aufweisen, zwischen angeschlossenen Kommunikationseinrichtungen übertragbar sind, wobei die Kommunikationseinrichtungen jeweils einen Adressbereich in einem Adressraum der PCle-Bus-Hierarchie aufweisen, dessen Adressen als Zieladressen in Nachrichten für die jeweilige Kommunikationseinrichtung nutzbar sind, wobei die PCle-Bus-Hierarchien mittels einer Brückeneinrichtung miteinander derart verbunden sind, dass Nachrichten zwischen an unterschiedlichen PCle-Bus-Hierarchien angeschlossenen Kommunikationseinrichtungen austauschbar sind, wobei das Rechnersystem wenigstens eine Peripherieeinrichtung mit einer Kommunikationseinrichtung aufweist, die von den CPUs gemeinsam nutzbar ist, wobei die Brückeneinrichtung eine Übersetzungseinrichtung aufweist, welche zur Übersetzung der Zieladresse von Nachrichten ausgebildet ist, die von einer PCle-Bus-Hierarchie in eine andere übertragen werden.

2. Rechnersystem nach Anspruch 1, **dadurch gekennzeichnet, dass** die Brückeneinrichtung eine reziproke Übersetzungseinrichtung aufweist, welche zur Übersetzung der Zieladresse und der Herkunftsadresse ausgebildet ist, wobei die Adressen durch die Übersetzungseinrichtung rückübersetzbar sind.

3. Rechnersystem nach Anspruch 1 oder 2, **dadurch gekennzeichnet, dass** die Übersetzungseinrichtung eine Zuordnungseinrichtung aufweist, mittels der eine Adressidentifikationskennzahl einer Adresse zur Übersetzung der Zieladresse und/oder der Herkunftsadresse zuordenbar ist.

4. Rechnersystem nach einem der voranstehenden Ansprüche, **dadurch gekennzeichnet, dass** zwischen den Brückeneinrichtungen und den PCle-Hierarchien wenigstens eine Wächtereinrichtung zur Überwachung der von der Brückeneinrichtung übermittelten Nachrichten angeordnet ist.

5. Rechnersystem nach einem der voranstehenden Ansprüche, **dadurch gekennzeichnet, dass** wenigstens eine der Kommunikationseinrichtungen eine Übersetzungseinrichtung zur Abbildung mehrerer Adressbereiche der angeschlossenen PCle-Hierarchie in den Adressbereich der Kommunikationseinrichtung aufweist.

6. Rechnersystem nach einem der voranstehenden Ansprüche, **dadurch gekennzeichnet, dass** die Brückeneinrichtung virtualisierbar ist.

7. Rechnersystem nach einem der voranstehenden Ansprüche, **dadurch gekennzeichnet, dass** die PCle-Bus-Hierarchie wenigstens 2-fach redundant ausgeführt ist, wobei die PCle-Bus-Hierarchie Zuammenfüg-/Verteilkomponenten (splitter/combiner-Komponenten) aufweist.

8. Rechnersystem nach einem der voranstehenden Ansprüche, **dadurch gekennzeichnet, dass** die Kommunikationseinrichtungen eine Identifikationserzeugungseinrichtung zur Erzeugung einer eindeutigen Identifikationsnummer für PCle-Funktionen aufweisen.

9. Rechnersystem nach einem der voranstehenden Ansprüche, **dadurch gekennzeichnet, dass** die Kommunikationseinrichtungen über eine Signalisierungseinrichtung zur Ablage wenigstens eines DMA-Bereitschaftssignals verfügen.

10. Rechnersystem nach einem der voranstehenden Ansprüche, **dadurch gekennzeichnet, dass** wenigstens eine der Kommunikationeinrichtungen eine Umschaltereinrichtung aufweist, die zur Annahme von Nachrichten in mehreren durch das PCle-Protokoll definierten Addressbereichen ausgebildet ist, wobei die Adressen in dem Adressraum eine Bus-ID aufweisen, mittels der die Adressbereiche identifizierbar sind.

11. Verfahren zum Hochfahren eines Rechnersystems nach einem der voranstehenden Ansprüche, **gekennzeichnet durch** die Schritte:
a) Hochfahren der Brückeneinrichtungen und einer Master-CPU;
b) Konfigurieren der Brückeneinrichtungen **durch** die Master-CPU;
c) Hochfahren weiterer CPUs.

12. Verfahren zum Hochfahren eines Rechnersystems nach einem der Ansprüche 1 bis 10, **gekennzeichnet durch** die Schritte:
a) Hochfahren der Brückeneinrichtungen unter Verwendung von Informationen aus nichtflüchtigen Speichereinrichtungen
b) Hochfahren der CPUs nach Abschluss von Schritt a).

13. . Verfahren zur gemeinsamen Verwendung von mehreren Kommunikationseinrichtungen in einem Rechnersystem nach einem der Ansprüche 1 bis 10, **gekennzeichnet durch**: Belegung eines einzelnen kontinuierlichen Speicherfensters pro PCle Funktion.

14. Verfahren zur gemeinsamen Verwendung von mehreren Kommunikationseinrichtungen in einem Rechnersystem nach einem der Ansprüche 1 bis 10, **gekennzeichnet durch**: Anordnung der Speicherfenster im Systemspeicherbereich, derart, dass die Speicherfenster innerhalb jeder einzelnen PCle-Bus-Hierarchie nicht überlappen.

15. Luftfahrzeug mit einem Rechnersystem gemäß einem der Ansprüche 1 bis 10, mit dem ein Verfahren gemäß einem der Ansprüche 11 bis 14 ausführbar ist.
